# EUROPÄISCHE PATENTSCHRIFT

(11) **EP 2 524 494 B1**
(45) Veröffentlichungstag und Bekanntmachung des Hinweises auf die Patenterteilung: **20.04.2016**
(21) Anmeldenummer: 11700739.3
(22) Anmeldetag: 13.01.2011
(51) Int. Cl.: H04N 5/225, B60R 11/04, B60R 11/00

(54) **VEREINFACHTE VORRICHTUNG EINER KAMERAEINHEIT EINES KRAFTFAHRZEUGS**
SIMPLIFIED DEVICE OF A CAMERA UNIT OF A MOTOR VEHICLE
DISPOSITIF SIMPLIFIÉ D'UN ENSEMBLE CAMÉRA D'UN VÉHICULE À MOTEUR

(30) Priorität: 25.01.2010 DE 102010001196; 15.01.2010 DE 102010000955
(43) Veröffentlichungstag der Anmeldung: 21.11.2012
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Vogel, Andreas
(86) Internationale Anmeldenummer: PCT/EP2011/050404
(87) Internationale Veröffentlichungsnummer: WO 2011/086132

(56) Entgegenhaltungen:
- EP-A1- 1 529 688
- DE-A1- 10 204 764
- DE-A1-102005 049 566
- DE-A1-102006 023 103
- DE-A1-102006 039 192
- DE-A1-102006 048 373
- DE-A1-102008 010 966

## Beschreibung

Die Erfindung betrifft eine Vorrichtung für ein Kraftfahrzeug, mit einer Kameraeinheit, die in eine Ruheposition und in eine aktive Position bringbar ist, und einem Schutzelement, das in eine Schließstellung und in eine Offenstellung führbar ist, wobei in der Schließstellung des Schutzelementes die Kameraeinheit sich in ihrer Ruheposition von außen unzugänglich hinter dem Schutzelement und in der Offenstellung des Schutzelementes die Kameraeinheit sich in der aktiven Position zur Bilderfassung befindet, und mit einer Antriebseinheit zur Bewegung der Kameraeinheit und des Schutzelementes. Ferner betrifft die Erfindung ein Kraftfahrzeug mit einer Kameraeinheit.

Der Einsatz von Kameras beziehungsweise einer Kameraeinheit zur Fahrzeugumfelderfassung ist bereits bekannt. Derartige Kameraeinheiten kommen beispielsweise als Einpark- und/oder Rangierhilfen bei Kraftfahrzeugen zum Einsatz, um insbesondere die mit den konventionellen Spiegeln des Kraftfahrzeugs nicht einsehbaren Bereiche um das Auto herum zu erfassen.

Aus der DE 100 13 425 A1 ist eine Aufnahmevorrichtung für eine Kamera, die zur Fahrzeugumfelderfassung dient, bekannt. Die Aufnahmevorrichtung ist an der Karosserie des Fahrzeugs angebracht und kann zur Fahrzeugumfelderfassung aus der Karosserie ausgefahren oder ausgeklappt werden. Die Kamera ist dabei starr an der Aufnahmevorrichtung befestigt, so dass die Kamera beim Ausfahren der Aufnahmevorrichtung mit ausgefahren wird. Eine derartige Kameraanordnung ist unflexibel, nimmt viel Bauraum in Anspruch und schützt die Kamera in eingefahrenem Zustand nur bedingt, da die Linse der Kamera schräg zur Öffnung beziehungsweise zur Abdeckung zeigt. Durch eine derartige Kameraanordnung ist die Kamera auch im geschlossenen Zustand störungsanfällig.

In der EP 1 529 688 A1 ist eine Kameraanordnung für Kraftfahrzeuge mit einer Kameraeinheit zur Bilderfassung offenbart, wobei die Kameraeinheit in einer nicht aktiven Position von außen im Wesentlichen unzugänglich hinter einem schwenkbaren Schutzelement angeordnet ist. Bei dieser Vorrichtung ist die Kameraeinheit unmittelbar am Schutzelement befestigt. Nachteiligerweise hat sich gezeigt, dass die unmittelbare Anordnung der Kamera am Schutzelement störungsanfällig ist. Aufgrund von Witterungseinflüssen und Verschleißerscheinungen dichtet das Schutzelement nach einer gewissen Zeit nicht mehr zufriedenstellend ab, so dass die am Schutzelement befestigte Kameraeinheit gewissen Schmutz- und Feuchtigkeitsbelastungen ausgesetzt ist. Insbesondere die Objektive der Videokamera müssen deshalb häufig gereinigt werden. Außerdem kann die Kamera aufgrund ihrer direkten Anordnung an dem Schutzelement leicht durch Schläge oder Stöße auf das Schutzelement beschädigt werden.

Eine andere Vorrichtungen für ein Kraftfahrzeug mit einer bewegbar gelagerten Kameraeinheit ist aus der DE 10 2006 048 373 A1 bekannt. Die Kameraeinheit ist über einen Motor in eine Ruheposition und in eine aktive Position bringbar. Ferner kann ein drehbar gelagertes Schutzelement in eine Schließstellung und in eine Offenstellung bewegt werden. Nachteilig bei dieser Vorrichtung ist, dass der Motor einen ersten Mechanismus zur Bewegung der Kameraeinheit und einen zweiten Mechanismus zur Bewegung des Schutzelementes aufweist. Dies macht die Vorrichtung bautechnisch kompliziert, das heißt, die Vorrichtung benötigt relativ viele Bauelemente, wodurch auch die Herstellung einer derartigen Vorrichtung kostenintensiv ist.

Aufgabe der vorliegenden Erfindung ist es daher, eine einfache und kostengünstige Vorrichtung für ein Kraftfahrzeug mit einer Kameraeinheit zu schaffen, welche die oben genannten Nachteile vermeidet. Insbesondere soll die Vorrichtung wenige Bauelemente aufweisen, kompakt aufgebaut sein und einen wirksamen Schutz der Kameraeinheit, insbesondere im eingefahrenen Zustand, ermöglichen. Ferner soll ein Fahrzeug mit einer einfachen und kostengünstigen Vorrichtung mit einer Kameraeinheit geschaffen werden.

Diese Aufgaben werden erfindungsgemäß durch eine Vorrichtung für ein Kraftfahrzeug mit einer Kameraeinheit mit den Merkmalen gemäß dem unabhängigen Patentanspruch 1 sowie durch ein Kraftfahrzeug mit einer Kameraeinheit mit den Merkmalen gemäß Patentanspruch 18 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Kraftfahrzeug und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch eine Vorrichtung für ein Kraftfahrzeug, mit einer Kameraeinheit, die in eine Ruheposition und in eine aktive Position bringbar ist, und einem Schutzelement, das in eine Schließstellung und in eine Offenstellung führbar ist, wobei in der Schließstellung des Schutzelementes die Kameraeinheit sich in ihrer Ruheposition von außen unzugänglich hinter dem Schutzelement und in der Offenstellung des Schutzelementes die Kameraeinheit sich in der aktiven Position zur Bilderfassung befindet, und mit einer Antriebseinheit zur Bewegung der Kameraeinheit und des Schutzelementes gelöst, wobei die Vorrichtung dadurch gekennzeichnet ist, dass die Kameraeinheit und das Schutzelement beweglich aneinander angelenkt sind.

Dadurch, dass die Kameraeinheit und das Schutzelement beweglich aneinander angelenkt sind, das heißt relativ zueinander, beweglich miteinander verbunden sind, kann die Vorrichtung kompakt ausgebildet, die Kamera in ihrer Ruheposition gut geschützt und in der aktiven Position flexibel und optimal zur Fahrzeugumfelderfassung angeordnet werden. Insbesondere können durch die bewegliche Verbindung der Kameraeinheit und des Schutzelementes miteinander wenig Bauelemente für die Vorrichtung, insbesondere für die Antriebseinheit, verwendet werden, da bei einer Bewegung eines der beiden Elemente, das andere Element mit bewegt wird.

Vorzugsweise sind die Kameraeinheit und das Schutzelement dreh- und/oder schwenkbar aneinander befestigt. Dies kann beispielsweise über ein Gelenk erfolgen. Ferner kann beispielsweise eine Achse vorgesehen sein, um die sowohl die Kameraeinheit, als auch das Schutzelement drehbar gelagert sind. Dadurch, dass die Kameraeinheit und das Schutzelement drehbeweglich aneinander gekoppelt sind, kann die Kameraeinheit beim Überführen der Kameraeinheit aus der aktiven Position in die Ruheposition derart verschwenkt werden, dass die Linse beziehungsweise das Objektiv der Kameraeinheit in Richtung des Fahrzeuginneren zeigt. Hierdurch sind die Linse beziehungsweise das Objektiv der Kameraeinheit und damit die Kameraeinheit in der Ruheposition geschützt angeordnet. Schmutzpartikel, die trotz der Abdeckung beziehungsweise Abdichtung durch das Schutzelement in Richtung der Kameraeinheit gelangen, beispielsweise durch Verschleiß der Dichtung des Schutzelementes, können allenfalls auf das Kameragehäuse treffen, aber nicht direkt in beziehungsweise auf das Objektiv. Die dreh- und/oder schwenkbewegliche Anordnung der Kameraeinheit an dem Schutzelement ermöglicht ferner, dass während des Öffnens des Schutzelementes, das heißt des Bewegens des Schutzelementes aus der Schließstellung in die Offenstellung, die Kameraeinheit so verschwenkt und/oder gedreht werden kann, dass diese optimal zu der zu beobachtenden Umgebung ausgerichtet werden kann.

Vorzugsweise ist bei der Vorrichtung vorgesehen, dass die Antriebseinheit derart mit dem Schutzelement in Wirkverbindung steht, dass bei einer Bewegung des Schutzelementes zwischen der Schließstellung und der Offenstellung sich gleichzeitig die Kameraeinheit relativ zum Schutzelement bewegt, oder dass die Antriebseinheit derart mit der Kameraeinheit in Wirkverbindung steht, dass bei einer Bewegung der Kameraeinheit zwischen der Ruheposition und der aktiven Position sich gleichzeitig das Schutzelement relativ zur Kameraeinheit bewegt. Dass bedeutet, egal, ob die Kameraeinheit und das Schutzelement durch die Antriebseinheit bewegt werden, nimmt das durch die Antriebseinheit bewegte Element das entsprechend andere Element mit. Wird das Schutzelement durch eine Krafteinwirkung der Antriebseinheit aus der Schließstellung in die Offenstellung gebracht, so nimmt das Schutzelement während der Bewegung die Kameraeinheit mit, so dass diese parallel zu der Bewegung des Schutzelementes aus der Ruheposition in die aktive Position gebracht wird. Wird das Schutzelement durch eine direkte Krafteinwirkung der Antriebseinheit geschlossen, so überführt das Schutzelement die Kameraeinheit aufgrund der beweglichen Verbindung beider Elemente miteinander aus der aktiven Position in die Ruheposition. Alternativ dazu kann auch die Kameraeinheit durch die Antriebseinheit bewegt werden. In diesem Fall bewegt die Kameraeinheit aufgrund der beweglichen Verbindung das Schutzelement mit. Sorgt die Antriebseinheit dafür, dass die Kameraeinheit von der aktiven Position in die Ruheposition bewegt wird, überführt die Kameraeinheit während ihrer Bewegung gleichzeitig das Schutzelement aus der Offenstellung in die Schließstellung. Die Antriebseinheit kann entweder in Wirkverbindung mit der Kameraeinheit oder mit dem Schutzelement stehen. Egal, wo die Antriebseinheit angreift, werden aufgrund der beweglichen Kopplung der Kameraeinheit und des Schutzelementes immer sowohl die Kameraeinheit, als auch das Schutzelement gleichzeitig bewegt. Hierdurch ist nur eine einzige Antriebseinheit für beide Bauelemente erforderlich, wodurch Kosten gespart werden können gegenüber einer Lösung, wo sowohl für die Kameraeinheit, als auch für das Schutzelement jeweils eine eigene Antriebseinheit erforderlich ist.

Die Antriebseinheit der Vorrichtung kann zur Bewegung der Kameraeinheit und des Schutzelementes mittelbar oder unmittelbar an der Kameraeinheit oder an dem Schutzelement angreifen. So kann beispielsweise ein Antriebselement, insbesondere ein bewegbares Antriebselement, der Antriebseinheit unmittelbar an der Kameraeinheit oder an dem Schutzelement angeordnet, insbesondere angelenkt, sein. Alternativ dazu kann beispielsweise ein Antriebselement, insbesondere ein bewegbares Antriebselement, der Antriebseinheit mittelbar, das heißt über wenigstens ein weiteres Zwischenelement, wie beispielsweise ein Zwischengetriebe oder ein Schwenkarm, an der Kameraeinheit oder an dem Schutzelement angeordnet, insbesondere angelenkt, sein. Je nach Ausgestaltung und Größe des Schutzelementes und der Kameraeinheit kann die unmittelbare oder die mittelbare Verbindung der Antriebseinheit mit der Kameraeinheit oder dem Schutzelement vorgesehen sein. Durch die Antriebseinheit können die Kameraeinheit und das Schutzelement gleichzeitig bewegt werden, egal, ob die Antriebseinheit direkt oder indirekt an einem der beiden Bauelemente angreift.

Gemäß einer bevorzugten Weiterentwicklung der Erfindung kann bei der Vorrichtung vorgesehen sein, dass das Schutzelement um eine erste Achse drehbar und/oder schwenkbar angeordnet und dass die Kameraeinheit um eine zweite Achse drehbar gelagert ist. Die erste und die zweite Achse sind vorzugsweise fest, das heißt unbeweglich, in oder an der Vorrichtung angeordnet. In einer anderen Ausführungsvariante der Vorrichtung ist denkbar, dass zumindest eine Achse beweglich angeordnet ist. Die bewegliche Anlenkung beziehungsweise Verbindung der Kameraeinheit an dem Schutzelement ermöglicht, dass sowohl die Kameraeinheit, als auch das Schutzelement um jeweils eine feststehende Achse gedreht beziehungsweise verschwenkt werden können. Hierdurch kann die Kameraeinheit dem Schutzelement folgen, wenn diese um die erste Achse verschwenkt wird. Umgekehrt kann das Schutzelement der Kameraeinheit folgen, wenn diese durch die Antriebseinheit um die zweite Achse verschwenkt wird. Bei der Bewegung der Kameraeinheit und des Schutzelementes bleiben diese miteinander verbunden, aber ihre Position relativ zueinander verändert sich.

Gemäß einer weiteren vorteilhaften Weiterentwicklung der Erfindung kann bei der Vorrichtung vorgesehen sein, dass die Antriebseinheit ein bewegbares Antriebselement aufweist, das zur Bewegung der Kameraeinheit oder des Schutzelementes mit der Kameraeinheit oder dem Schutzelement in Wirkverbindung steht. Das bewegbare Antriebselement der Antriebseinheit dient insbesondere als Verbindung zwischen einem Motor der Antriebseinheit und der Kameraeinheit oder dem Schutzelement. Die Antriebseinheit, insbesondere ein Motor der Antriebseinheit, bewegt das Antriebselement, das wiederum in unmittelbarer oder mittelbarer Wirkverbindung mit der Kameraeinheit oder dem Schutzelement steht. Durch die Bewegung des Antriebselementes kann die Kameraeinheit aus der Ruheposition in die aktive Position, oder umgekehrt, und das Schutzelement aus der Schließstellung in die Offenstellung, oder umgekehrt, gebracht werden.

Das bewegbare Antriebselement der Antriebseinheit kann verschiedenartig ausgebildet sein. In einer vorteilhaften Ausführungsvariante der Vorrichtung kann vorgesehen sein, dass das bewegbare Antriebselement der Antriebseinheit wenigstens eine Antriebsstange ist, die an einer Anlenkeinrichtung an der Kameraeinheit oder an dem Schutzelement dreh- und/oder schwenkbeweglich befestigt ist, wobei die wenigstens eine Antriebsstange durch die Antriebseinheit bewegbar ist. Beispielsweise kann die der Antriebseinheit zugewandte Seite der Antriebsstange an einer drehbaren Kurbel der Antriebseinheit beweglich angeordnet sein, so dass die Antriebsstange der Bewegung der Kurbel folgt und dadurch die Kameraeinheit und das Schutzelement bewegt. Die Kurbel wird vorzugsweise abwechselnd in dem Uhrzeigersinn und gegen den Uhrzeigersinn gedreht. Hierdurch kann die Antriebsstange die Kameraeinheit und das Schutzelement entweder zu der Antriebseinheit hinziehen, um diese zu schließen, oder wegdrücken, um die Kameraeinheit und das Schutzelement zu Öffnen, das heißt in die aktive Position beziehungsweise in die Offenstellung zu überführen. Die Antriebsstange kann beispielsweise auch teleskopartig ausgebildet sein. Während des Ausfahrens der Antriebsstange drückt diese die Kameraeinheit und das Schutzelement in die aktive Position beziehungsweise in die Offenstellung und während des Einfahrens der Antriebsstange zieht diese das Schutzelement und die Kameraeinheit zurück in die Schließstellung beziehungsweise in die Ruheposition. Dabei kann die Antriebsstange entweder an der Kameraeinheit oder an dem Schutzelement beweglich angelenkt sein. Es ist auch denkbar, dass zwei oder mehr über Gelenke miteinander verbundene Antriebsstangen vorgesehen sind.

Gemäß einer bevorzugten alternativen Ausführungsform der Vorrichtung kann bei dieser vorgesehen sein, dass das bewegbare Antriebselement der Antriebseinheit wenigstens ein Nocken oder wenigstens eine exzentrisch angeordnete Scheibe ist, der/die zur Bewegung der Kameraeinheit und des Schutzelementes an der Kameraeinheit oder an dem Schutzelement anliegt, und insbesondere dass ein federelastisches Element vorgesehen ist, das an der Kameraeinheit oder an dem Schutzelement befestigt ist und das die Kameraeinheit und das Schutzelement gegen den wenigstens einen Nocken oder die wenigstens eine exzentrisch angeordnete Scheibe vorspannt, so dass entweder die Kameraeinheit oder das Schutzelement permanent an dem wenigstens einen Nocken oder der wenigstens einen exzentrisch angeordneten Scheibe anliegt. Der Nocken, insbesondere der exzentrisch gelagerte Nocken, oder die exzentrisch gelagerte Scheibe liegt aufgrund der Federspannung des federelastischen Elementes permanent an der Kameraeinheit oder dem Schutzelement an. Vorzugsweise ist das federelastische Element derart an der Kameraeinheit oder dem Schutzelement angeordnet, dass dieses aufgrund seiner Federkraft die Kameraeinheit oder das Schutzelement gegen die Umlaufkante des Nockens beziehungsweise der Scheibe zieht. Das heißt, aufgrund der Federkraft des federelastischen Elementes liegt die Kameraeinheit oder das Schutzelement permanent an dem Nocken, insbesondere der Umlaufkante des Nockens, beziehungsweise an der exzentrisch gelagerten Scheibe, insbesondere an der Umlaufkante der exzentrisch gelagerten Scheibe, an. Hierdurch folgt die Kameraeinheit oder das Schutzelement der exzentrischen Bewegung des Nockens beziehungsweise der Scheibe, so dass durch die exzentrische Bewegung des Nockens beziehungsweise der Scheibe die Kameraeinheit und das Schutzelement zwischen ihren jeweiligen Endpositionen bewegt werden können. Der Nocken, insbesondere der exzentrisch ausgebildete Nocken, oder die exzentrisch gelagerte Scheibe, stellen das bewegbare Antriebselement der Antriebseinheit dar. Die Antriebseinheit sorgt für die exzentrische Bewegung des Nockens oder der Scheibe. Vorzugsweise ist der Nocken oder ist die Scheibe an einer Antriebswelle der Antriebseinheit befestigt. Durch die Drehung der Antriebswelle wird der Nocken oder wird die Scheibe exzentrisch um die Antriebswelle gedreht, um so die Kameraeinheit und das Schutzelemente entsprechend zu bewegen. Durch die bewegliche Verbindung der Kameraeinheit und des Schutzelementes aneinander, ist es egal, ob der Nocken oder die Scheibe an der Kameraeinheit oder an dem Schutzelement angreifen bzw. aufgrund der Federkraft des federelastischen Elementes anliegen. Das federelastische Element kann verschiedenartig in oder an der Vorrichtung angeordnet sein. Beispielsweise kann das federelastische Element als Druck- oder als Zugfeder ausgebildet sein. Das federelastische Element kann beispielsweise eine Schraubenfeder sein. Alternativ kann das federelastische Element eine Torsionsfeder, eine Biegefeder, wie eine Spiralfeder, eine Blattfeder oder eine Tellerfeder, sein. Ebenso ist es denkbar, dass das federelastische Element eine Luftdruckfeder, eine Wickelfeder oder eine Elastomerfeder ist.

Gemäß einer anderen bevorzugten Weiterentwicklung der Erfindung kann bei der Vorrichtung vorgesehen sein, dass das bewegbare Antriebselement der Antriebseinheit wenigstens ein Zahnrad ist, das zur Bewegung der Kameraeinheit und des Schutzelementes mit einem Zahnrad, dass fest mit der Kameraeinheit oder dem Schutzelement verbunden ist, in Eingriff steht. Vorzugsweise weist die Antriebseinheit als bewegbares Antriebselement ein Zahnrad auf. Es ist aber auch möglich, dass zwei oder mehr in Eingriff miteinander stehende Zahnräder vorgesehen sind. Durch eine Drehung des zumindest einen Zahnrades der Antriebseinheit wird das Zahnrad, das entweder an der Kameraeinheit oder an dem Schutzelement fest angeordnet ist, gedreht. Hierdurch werden die Kameraeinheit und das Schutzelement gedreht beziehungsweise verschwenkt. Das heißt, die Kameraeinheit und das Schutzelement können über das Zahnrad der Antriebseinheit und das an der Kameraeinheit öder dem Schutzelement befestigte Zahnrad zwischen ihren jeweiligen Endpositionen bewegt werden. Um die Kameraeinheit und das Schutzelement zwischen den jeweiligen Endpositionen hin- und her zu bewegen, kann das Zahnrad der Antriebseinheit sowohl in den Uhrzeigersinn, als auch gegen den Uhrzeigersinn gedreht werden. Das Zahnrad an der Kameraeinheit oder an dem Schutzelement ist vorzugsweise in der Nähe der Drehachse der Kameraeinheit beziehungsweise des Schutzelementes angeordnet. Besonders bevorzugt ist eine Vorrichtung, bei der das Zahnrad an der Kameraeinheit konzentrisch um die zweite Achse der Vorrichtung drehbar gelagert angeordnet ist oder bei der das Zahnrad an dem Schutzelement konzentrisch um die erste Achse der Vorrichtung drehbar gelagert angeordnet ist. Die Achse, um die das Zahnrad der Kameraeinheit beziehungsweise des Schutzelementes und damit die Kameraeinheit beziehungsweise das Schutzelement drehbar gelagert ist, ist feststehend ausgebildet. Durch den Eingriff und die Drehung des Zahnrades der Antriebseinheit kann das fest an der Kameraeinheit oder dem Schutzelement angeordnete Zahnrad der Kameraeinheit oder des Schutzelementes gedreht werden und damit die Kameraeinheit beziehungsweise das Schutzelement zwischen der Ruheposition und der aktiven Position beziehungsweise zwischen der Schließstellung und der Offenstellung hin und her bewegt werden. Das Zahnrad der Antriebseinheit kann entweder an einer Antriebswelle der Antriebseinheit angeordnet sein oder mit einem weiteren Zahnrad der Antriebseinheit wirkverbunden sein. In einer vorteilhaften Ausführungsform der Vorrichtung kann vorgesehen sein, dass die Antriebseinheit eine Getriebeeinheit aufweist, die zur Bewegung des Antriebselementes mit diesem in Wirkverbindung steht. Dass heißt, das bewegbare Antriebselement, insbesondere das Zahnrad, kann über eine Getriebeeinheit der Antriebseinheit angetrieben werden. So kann die Antriebseinheit einen Motor aufweisen, der eine Antriebswelle antreibt. Die Drehbewegung der Antriebswelle überträgt die Getriebeeinheit auf das Zahnrad der Antriebseinheit, dass die Drehbewegung auf das Zahnrad der Kameraeinheit beziehungsweise des Schutzelementes überträgt. Je nach Drehrichtung des mit dem Zahnrad der Kameraeinheit oder des Schutzelementes in Eingriff stehenden Zahnrades der Antriebseinheit können die Kameraeinheit und das Schutzelement geöffnet oder geschlossen werden. Die Getriebeeinheit kann eine Vielzahl verschiedenartig ausgebildeter Zahnräder aufweisen.

Die Antriebseinheit kann verschiedenartig ausgebildet sein. So kann die Antriebseinheit als Antrieb einen Motor, wie beispielsweise einen Elektromotor, einen Hydraulikmotor oder einen pneumatischen Motor, aufweisen. Auch andere Antriebe, wie magnetische Antriebe, sind einsetzbar. Vorzugsweise werden diese Antriebe über die Antriebseinrichtung des Kraftfahrzeuges angetrieben. So kann die Antriebseinheit, insbesondere der Motor der Antriebseinheit, der Vorrichtung über einen Verbrennungsmotor, über eine Batterie, über einen Brennstoffzellenstack, etc. angetrieben sein.

Gemäß einer besonders bevorzugten Weiterentwicklung der Erfindung kann bei der Vorrichtung vorgesehen sein, dass die Kameraeinheit ein Führungselement aufweist, das in einer Kulissenführung des Schutzelementes führbar gehalten ist, oder dass das Schutzelement ein Führungselement aufweist, das in einer Kulissenführung der Kameraeinheit führbar gehalten ist. Die Kameraeinheit und das Schutzelement können über eine Kulissenführung und ein in der Kulissenführung geführtes Führungselement beweglich aneinander angelenkt beziehungsweise verbunden sein. Besonders bevorzugt sind die Kulissenführung an dem Schutzelement und das Führungselement an der Kameraeinheit angeordnet. Es ist aber auch umgekehrt möglich, dass die Kulissenführung an der Kameraeinheit und das Führungselement an dem Schutzelement angeordnet sind. Durch eine derart ausgebildete Verbindung zwischen dem Schutzelement und der Kameraeinheit kann die Vorrichtung besonders kompakt aufgebaut sein. Durch eine geschickte Anordnung der Kulissenführung und des Führungselementes können die Kameraeinheit und das Schutzelement annähernd parallel zueinander angeordnet werden. Bei der relativen Bewegung der Kameraeinheit zu dem Schutzelement verläuft das Führungselement entlang der Kulissenführung.

Ferner ist eine Vorrichtung bevorzugt, bei der die Antriebseinheit mit der Kameraeinheit oder dem Schutzelement derart in Wirkverbindung steht, dass in der Schließstellung und/oder Offenstellung des Schutzelementes eine Bewegung des Schutzelementes durch Einwirkung einer von außen manuell ausgeübten Kraft auf das Schutzelement nicht möglich ist. Insbesondere ist die Antriebseinheit der Vorrichtung selbsthemmend ausgebildet. Das heißt, sowohl in der Schließstellung, als auch in der Offenstellung des Schutzelementes ist eine Bewegung des Schutzelementes nicht möglich. Die Offenstellung sowie die Schließstellung des Schutzelementes stellen definierte stabile Positionen dar, die durch die Antriebseinheit vorgegeben sind. Durch die selbsthemmende Ausgestaltung der Antriebseinheit ist vorteilhafterweise sowohl die Offenstellung, als auch die Schließstellung des Schutzelementes begrenzt.

Die erfindungsgemäße Vorrichtung für ein Kraftfahrzeug mit einer Kameraeinheit ist einfach und kostengünstig ausgebildet und gewährleistet insbesondere in der Schließstellung des Schutzelementes einen sicheren Schutz der Kameraeinheit vor äußeren Einflüssen, insbesondere Stößen oder Schlägen.

Die erfindungsgemäße Vorrichtung ist an einem Kraftfahrzeug, insbesondere am hinteren Ende eines Kraftfahrzeuges, angeordnet. Beispielsweise kann die Vorrichtung in dem Fahrzeugrahmen, in einem Verkleidungselement, wie einem Stoßfänger, oder in der Kofferraumklappe des Kraftfahrzeuges angeordnet sein. Vorzugsweise ist die erfindungsgemäße Vorrichtung in einem Personenkraftwagen oder Lastkraftwagen vorgesehen. Es ist auch denkbar, dass die Vorrichtung in anderen Kraftfahrzeugen, beispielsweise in Nutzfahrzeugen, wie Baggern, Kränen, Raupen, etc., vorgesehen ist.

Bei der erfindungsgemäßen Vorrichtung ist die Kameraeinheit fahrzeugseitig angeordnet und befindet sich in ihrer Ruheposition in einer geschützten Lage hinter dem Schutzelement, das sich entsprechend in seiner Schließstellung befindet. Während der Bewegung des Schutzelementes in seine Offenstellung wird die Kameraeinheit gleichzeitig aus ihrer Ruheposition in die aktive Position überführt. In der aktiven Position kann die Kameraeinheit zur Bilderfassung eingesetzt werden. Dadurch, dass sowohl das Schutzelement, als auch die Kameraeinheit definiert bewegt werden, können diese bei einer Bewegung nicht miteinander kollidieren.

Besonders bevorzugt kann bei der Vorrichtung vorgesehen sein, dass die Kameraeinheit an einem bewegbar gelagerten Schwenkarm angeordnet ist, der die Antriebseinheit mit dem Schutzelement verbindet, wobei durch eine von der Antriebseinheit ausgelöste Bewegung des Schwenkarms das Schutzelement in die Schließstellung und in die Offenstellung sowie die Kameraeinheit in die Ruheposition und in die aktive Position führbar sind.

Die Vorrichtung ist derart ausgebildet, dass durch eine von der Antriebseinheit ausgelöste Bewegung des Schwenkarms das Schutzelement sowohl von der Schließstellung in die Offenstellung als auch von der Offenstellung in die Schließstellung sowie die Kameraeinheit sowohl von der Ruheposition in die aktive Position als auch von der aktiven Position in die Ruheposition bewegt werden kann.

Die Kameraeinheit ist in dieser Ausführungsform der Vorrichtung an einem bewegbar gelagerten Schwenkarm angeordnet, der die Antriebseinheit mit dem Schutzelement verbindet. Durch eine von der Antriebseinheit ausgelöste Bewegung des Schwenkarms wird sowohl das Schutzelement als auch die Kameraeinheit bewegt. Durch die kombinierte Bewegung des Schutzelementes und der Kameraeinheit ist die Vorrichtung konstruktiv einfach ausgebildet. Die Antriebseinheit bewegt lediglich einen einzigen Schwenkarm, um das Schutzelement aus der Schließstellung in die Offenstellung und gleichzeitig die Kameraeinheit aus der Ruheposition in die aktive Position zu führen. Dadurch, dass die Kameraeinheit an dem Schwenkarm und nicht an dem Schutzelement angeordnet ist, ist die Kameraeinheit vor äußeren Einflüssen, wie Schlägen oder Stößen, geschützt.

Dadurch, dass die Kamera an dem Schwenkarm angeordnet ist, der mit der Antriebseinheit wirkverbunden ist, das heißt der durch die Antriebseinheit bewegt werden kann, und gleichzeitig das Schutzelement an dem Schwenkarm angeordnet ist, können durch die Bewegung des Schwenkarms gleichzeitig das Schutzelement und die Kameraeinheit bewegt werden.

Der Schwenkarm ist nur durch die Antriebseinheit bewegbar, so dass dieser nicht manuell betätigt werden kann. Hierdurch sind das mit dem Schwenkarm verbundene Schutzelement sowie die an dem Schwenkarm angeordnete Kameraeinheit in jeder Lage sicher gehalten. Das heißt, wird der Schwenkarm nicht durch die Antriebseinheit bewegt, verharren das Schutzelement sowie die Kameraeinheit in einer stabilen Lage beziehungsweise einer festen Position, das heißt entweder in der Schließstellung oder der Offenstellung beziehungsweise entweder in der Ruheposition oder in der aktiven Position.

Das Schutzelement kann entweder bewegbar gelagert oder starr an dem Schwenkarm angeordnet sein. Ist das Schutzelement beispielsweise starr mit dem Schwenkarm verbunden, wird das Schutzelement bei einer Bewegung des Schwenkarms translatorisch bewegt. Bei einer bewegbaren Lagerung des Schutzelementes an dem Schwenkarm, kann das Schutzelement bei einer Bewegung des Schwenkarms beispielsweise um eine Achse gedreht beziehungsweise verschwenkt werden.

Gemäß einer bevorzugten Weiterentwicklung der Erfindung kann bei der Vorrichtung vorgesehen sein, dass das Schutzelement um eine erste Achse drehbar und/oder schwenkbar angeordnet und dass der Schwenkarm mit der Kameraeinheit um eine zweite Achse drehbar gelagert ist. In dieser Ausführungsvariante der Vorrichtung ist das Schutzelement nicht nur mit dem Schwenkarm verbunden, sondern zusätzlich an einer ersten Achse drehbar und/oder schwenkbar angeordnet. Hierdurch ist das Schutzelement, das auch als Schutzklappe bezeichnet werden kann, besonders sicher an der Vorrichtung beziehungsweise an einem Fahrzeug gehalten. Die erste Achse ist insbesondere als eine feststehende Achse ausgebildet. Der Schwenkarm, an dem die Kameraeinheit sitzt, ist um eine zweite Achse, vorzugsweise ebenfalls eine feststehende Achse, drehbar gelagert. Hierdurch kann der Schwenkarm durch die Antriebseinheit um die zweite Achse gedreht werden. Das heißt, durch eine Drehbewegung des Schwenkarms können die Kameraeinheit zwischen einer Ruheposition und einer aktiven Position beziehungsweise das Schutzelement zwischen einer Schließstellung und einer Offenstellung hin und her bewegt werden.

Vorteilhafterweise ist die Vorrichtung derart ausgebildet, dass der Schwenkarm mit dem Schutzelement derart in Wirkverbindung steht, dass in der Schließ- und/oder Offenstellung des Schutzelementes eine Bewegung des Schutzelementes durch Einwirkung einer von außen manuell ausgeübten Kraft auf das Schutzelement nicht möglich ist. Das heißt, sowohl in der Schließstellung, als auch in der Offenstellung des Schutzelementes ist eine Bewegung des Schutzelementes nicht möglich. Die Offenstellung sowie die Schließstellung des Schutzelementes stellen definierte stabile Positionen dar, die durch den Schwenkarm sowie die Verbindung des Schutzelementes an dem Schwenkarm vorgegeben sind. Durch die Art der Verbindung des Schutzelementes an dem Schwenkarm ist vorteilhafterweise sowohl die Offenstellung, als auch die Schließstellung des Schutzelementes begrenzt.

Die Antriebseinheit der Vorrichtung kann beispielsweise einen Stellantrieb aufweisen, über den der Schwenkarm bewegt werden kann. Beispielsweise kann der Schwenkarm durch eine Hubbewegung, insbesondere eine lineare Hubbewegung, des Stellantriebs hin und her bewegt werden, so dass dieser sich um die zweite Achse drehen kann. Die Antriebseinheit kann ferner einen Motor, insbesondere einen Elektromotor, aufweisen beziehungsweise als ein Motor, insbesondere als ein Elektromotor, ausgebildet sein. Ein Vorteil einer derartig ausgebildeten Antriebseinheit ist, dass der Motor selbsthemmend wirkt, so dass eine manuelle Bewegung des über den Schwenkarm mit dem Motor verbundenen Schutzelementes nicht möglich ist. Das heißt, wird beispielsweise an dem Schutzelement gezogen, verhindert der selbsthemmend ausgebildete Motor die Bewegung des Schutzelementes und damit die der Kameraeinheit. Somit stellt ein selbsthemmend ausgebildeter Motor einen wirksamen Diebstahlschutz dar.

In einer bevorzugten Ausführungsform der Vorrichtung ist vorgesehen, dass die Antriebseinheit eine um eine dritte Achse drehbar gelagerte Kurbel aufweist, dass an der Kurbel ein Führungselement angeordnet ist, das parallel zur dritten Achse verläuft und bei einer Drehbewegung der Kurbel kreisförmig um die dritte Achse führbar ist, und dass das Führungselement zur Bewegung des Schwenkarms mit dem Schwenkarm wirkverbunden ist. Durch eine derartige Ausgestaltung der Vorrichtung kann der Schwenkarm sicher und gleichförmig bewegt werden. Die Antriebseinheit kann die Kurbel wahlweise im Uhrzeigersinn oder entgegen des Uhrzeigersinns drehen. An der Kurbel ist ein Führungselement vorgesehen, dass beabstandet zu der Drehachse der dritten Achse an der Kurbel angeordnet ist, so dass das Führungselement bei einer Drehbewegung der Kurbel kreisförmig um die Drehachse der dritten Achse bewegt werden kann. Das Führungselement ist zur Bewegung des Schwenkarms mit dem Schwenkarm wirkverbunden. Das heißt, bei einer kreisförmigen beziehungsweise zumindest teilkreisförmigen Bewegung des Führungselementes kann der Schwenkarm um die zweite Achse gedreht werden.

Gemäß einer weiteren bevorzugten Weiterentwicklung der Erfindung kann bei der Vorrichtung vorgesehen sein, dass das der Antriebseinheit zugewandte Ende des Schwenkarms eine Kulissenführung zur Bewegung des Schwenkarms durch die Antriebseinheit, insbesondere zur Führung des Führungselementes der Kurbel, aufweist. Durch eine derartige Ausgestaltung des Schwenkarms kann das an der Kurbel der Antriebseinheit vorgesehene Führungselement durch Eingriff in die Kulissenführung des Schwenkarms diesen bei einer Drehung der Kurbel bewegen beziehungsweise um die zweite Achse drehen. Die Kulissenführung ist vorzugsweise eine Aussparung, insbesondere in Form einer Nut, in dem der Antriebseinheit zugewandten Ende des Schwenkarms. Dabei ist die Länge der Kulissenführung auf die Drehbewegung der Kurbel beziehungsweise des Führungselementes abgestimmt. Das Führungselement der Kurbel ist formschlüssig beziehungsweise annähernd formschlüssig in der Kulissenführung des Schwenkarms führbar beziehungsweise verschiebbar gelagert. Vorzugsweise ist das Führungselement der Kurbel als ein Nocken oder als ein Kulissenstein ausgebildet.

Das Schutzelement ist vorzugsweise ebenfalls beweglich an dem Schwenkarm angeordnet. Insbesondere ist eine Vorrichtung bevorzugt, bei der das dem Schutzelement zugewandte Ende des Schwenkarms ein Führungselement aufweist, das in einer Kulissenführung des Schutzelementes führbar gehalten ist. Das heißt, bei einer Bewegung, insbesondere einer Drehbewegung, des Schwenkarms, gleitet das an dem Schwenkarm angeordnete Führungselement in der Kulissenführung des Schutzelementes entlang, wobei das Schutzelement bewegt, insbesondere gedreht, wird. Das Führungselement des Schwenkarms ist vorzugsweise als ein an dem Schwenkarm hervorstehendes Element, insbesondere als ein Nocken oder ein Kulissenstein, ausgebildet. Dabei verläuft die Längsachse des Führungselementes des Schwenkarms vorzugsweise parallel zu der zweiten und ersten Achse der Vorrichtung.

Insbesondere ist die Vorrichtung derart ausgebildet, dass in der Schließstellung des Schutzelementes das Führungselement des Schwenkarms an das der ersten Achse abgewandte Ende der Kulissenführung des Schutzelementes anschlägt und dass in der Offenstellung des Schutzelementes das Führungselement des Schwenkarms an das der ersten Achse zugewandte Ende der Kulissenführung des Schutzelementes anschlägt. Hierdurch ist die Position der Schließstellung des Schutzelementes sowie die Position der Offenstellung des Schutzelementes definiert vorgegeben. Die Enden der Kulissenführung bilden somit jeweils einen Anschlag für das Führungselement des Schwenkarms und begrenzen dadurch sowohl die Bewegung, insbesondere die Drehung, des Schwenkarms als auch die des Schutzelementes.

Gemäß einer bevorzugten Weiterentwicklung der Erfindung kann bei der Vorrichtung vorgesehen sein, dass die Kulissenführung des Schutzelementes oder der Kameraeinheit geradlinig und/oder gebogen ausgebildet ist. Gemäß einer anderen bevorzugten Weiterentwicklung der Erfindung kann bei der Vorrichtung vorgesehen sein, dass die Kulissenführung des Schwenkarms geradlinig und/oder gebogen ausgebildet ist und/oder dass die Kulissenführung des Schutzelementes geradlinig und/oder gebogen ausgebildet ist. Vorzugsweise sind die Kulissenführung des Schwenkarms und die Kulissenführung des Schutzelementes dann geradlinig ausgebildet, wenn der Schwenkarm um eine Achse, d.h. die zweite Achse, drehbar gelagert ist. Bevorzugt ist ferner, dass die Kulissenführung des Schutzelementes geradlinig ausgebildet ist und die Längsachse der Kulissenführung des Schutzelementes auf oder annähernd auf die erste Achse gerichtet ist. Hierdurch ist gewährleistet, dass das Führungselement des Schwenkarms optimal in der Kulissenführung des Schutzelementes gleitet und es bei der Bewegung des Schwenkarms und des Schutzelementes nicht zu Verhakungen kommt.

Das Führungselement des Schwenkarms ist an dem dem Schutzelement zugewandten Ende des Schwenkarms angeordnet. Da die Kameraeinheit vorzugsweise an der Stirnseite dieses Endes des Schwenkarms angeordnet ist, ist das Führungselement vorzugsweise an der Seite dieses Endes des Schwenkarms vorgesehen. Die Kameraeinheit ist insbesondere über eine kraftschlüssige Verbindung an dem dem Schutzelement zugewandten Ende des Schwenkarms angeordnet. Die Kameraeinheit bildet daher vorteilhafterweise den stimseitigen Abschluss des dem Schutzelement zugewandten Teils des Schwenkarms.

Gemäß einer weiteren bevorzugten Weiterentwicklung der Erfindung kann bei der Vorrichtung vorgesehen sein, dass das Führungselement der Kurbel drehbar an der Kurbel und/oder das Führungselement an dem dem Schutzelement zugewandten Ende des Schwenkarms drehbar an dem Schwenkarm angeordnet ist/sind. Hierdurch ist gewährleistet, dass das Führungselement des Schwenkarms und das Führungselement der Kurbel besonders sicher in den entsprechenden Kulissenführungen entlang gleiten können.

Der Schwenkarm der Vorrichtung kann verschiedenartig ausgebildet sein. Vorzugsweise ist der Schwenkarm abgewinkelt ausgebildet. Dabei kann der Schwenkarm einteilig oder mehrteilig, insbesondere zweiteilig, ausgebildet sein. Bei einer mehrteiligen Ausgestaltung des Schwenkarms sind die verschiedenen Teile des Schwenkarms im Betrieb der Vorrichtung fest miteinander verbunden. Vorteilhaft bei einer zwei- oder mehrteiligen Ausbildung des Schwenkarms ist, dass einzelne Teile leichter und kostengünstiger ausgetauscht werden können, als ein einteilig ausgebildeter Schwenkarm. Der Schwenkarm beziehungsweise die einzelnen Teile des Schwenkarms sind vorzugsweise aus Kunststoff oder Metall, insbesondere aus Leichtmetall, ausgebildet. Ein einteilig ausgebildeter Schwenkarm weist ein Loch, insbesondere in der Mitte beziehungsweise im Bereich der Mitte des Schwenkarms, auf, durch das der Schwenkarm an der zweiten Achse der Vorrichtung drehbar gelagert ist. Ist der Schwenkarm beispielsweise zweiteilig ausgebildet, weisen beide Teile beziehungsweise beide Schenkel des Schwenkarms jeweils ein Loch auf, die zur Lagerung der beiden Teile an der zweiten Achse dienen.

Bevorzugt ist das Schutzelement der Vorrichtung als ein Emblem ausgebildet beziehungsweise bevorzugt weist das Schutzelement der Vorrichtung ein Emblem auf. Ein Emblem im Sinne der Erfindung ist insbesondere ein Kennzeichen für eine Kraftfahrzeugmarke, insbesondere eine Automobilmarke. Dabei kann das Emblem zweidimensional oder dreidimensional ausgebildet sein.

Die erste und die zweite Achse der Vorrichtung sind vorzugsweise unbeweglich angeordnet. Dabei können sie an dem Kraftfahrzeug, insbesondere an einem Fahrzeugkarosserieteil, an einem Stoßfänger oder an der Kofferraumklappe des Kraftfahrzeuges angeordnet sein. Gemäß einer weiteren bevorzugten Weiterentwicklung der Erfindung kann bei der Vorrichtung vorgesehen sein, dass die erste Achse und die zweite Achse an einem Gehäuseelement der Vorrichtung angeordnet sind. Das Gehäuseelement der Vorrichtung ist vorzugsweise derart ausgebildet, dass es an einem Kraftfahrzeug, insbesondere an einem Fahrzeugkarosserieteil, an einem Stoßfänger oder an einer Kofferraumklappe eines Kraftfahrzeuges angeordnet werden kann. Dabei bildet das Gehäuseelement zumindest für einen Teil der Vorrichtung einen Schutzräum, der eine Öffnung aufweist, die durch das Schutzelement abgedeckt werden kann. Das heißt, in der Schließstellung des Schlusselementes deckt dieses die Öffnung vollständig ab, so dass die Vorrichtung, insbesondere der Schwenkarm, die Kameraeinheit sowie die Antriebseinheit geschützt sind. Die Antriebseinheit kann außerhalb des Gehäuseelementes, innerhalb des Kraftfahrzeuges, angeordnet sein. In diesem Fall weist das Gehäuseelement eine Aussparung, insbesondere einen Führungsschlitz, auf, durch den der Schwenkarm der Vorrichtung hindurchgeführt werden kann.

Bevorzugt ist, dass das Schutzelement in seiner Schließstellung die Öffnung des Gehäuseelementes der Vorrichtung abgedeckt und dass die Kameraeinheit in der aktiven Position durch die Öffnung des Gehäuseelementes der Vorrichtung hindurchgeführt ist.

Gemäß einem zweiten Aspekt der Erfindung wird die Aufgabe durch ein Kraftfahrzeug mit einer Kameraeinheit, gelöst, wobei das Kraftfahrzeug zumindest eine Vorrichtung gemäß dem ersten Aspekt der Erfindung aufweist. Die Kameraeinheit ist bewegbar in der Vorrichtung angeordnet. Vorzugsweise ist das Kraftfahrzeug als ein Lastkraftwagen oder ein Personenkraftwagen ausgebildet. Das Kraftfahrzeug kann ferner ein Boot beziehungsweise ein Schiff sein. Ebenso ist denkbar, dass das Kraftfahrzeug als ein Nutzfahrzeug, wie beispielsweise ein Bagger, eine Raupe, ein Kran etc., ausgebildet ist. Insbesondere vorteilhaft ist, wenn das Kraftfahrzeug zwei oder mehrere derartige Vorrichtung aufweist. Dabei können mehrere Vorrichtungen derart miteinander gekoppelt sein, dass sie parallel zueinander betrieben werden können. Insbesondere kann vorgesehen sein, dass eine Antriebseinheit mehrere Schwenkarme mit entsprechend angeordneten Kameraeinheiten bewegt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

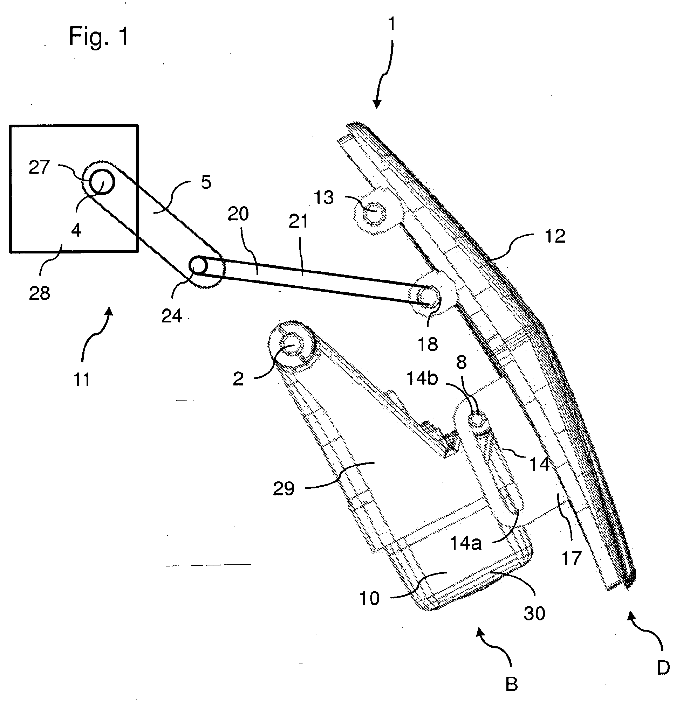

- Fig. 1: eine Seitenansicht einer ersten Ausführungsvariante der Vorrichtung für ein Kraftfahrzeug, mit einer Kameraeinheit, die nach dem erfindungsgemäßen Konstruktionsprinzip ausgebildet ist, wobei sich die Kameraeinheit in der aktiven Position und das Schutzelement in der Offenstellung befindet,

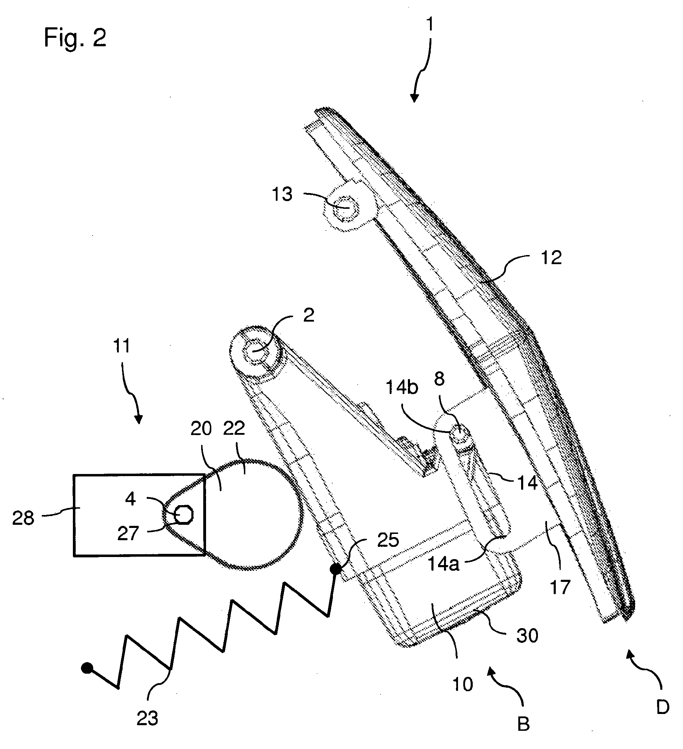

- Fig. 2: eine Seitenansicht einer zweiten Ausführungsvariante der Vorrichtung für ein Kraftfahrzeug, mit einer Kameraeinheit, die nach dem erfindungsgemäßen Konstruktionsprinzip ausgebildet ist, wobei sich die Kameraeinheit in der aktiven Position und das Schutzelement in der Offenstellung befindet,

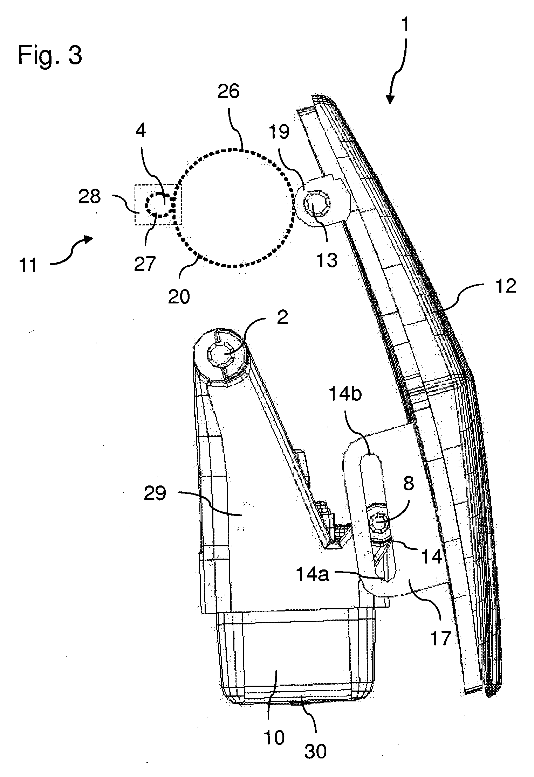

- Fig. 3: eine Seitenansicht einer dritten Ausführungsvariante der Vorrichtung für ein Kraftfahrzeug, mit einer Kameraeinheit, die nach dem erfindungsgemäßen Konstruktionsprinzip ausgebildet ist, wobei sich die Kameraeinheit zwischen der Ruheposition und der aktiven Position und das Schutzelement zwischen der Schließstellung und der Offenstellung befindet,

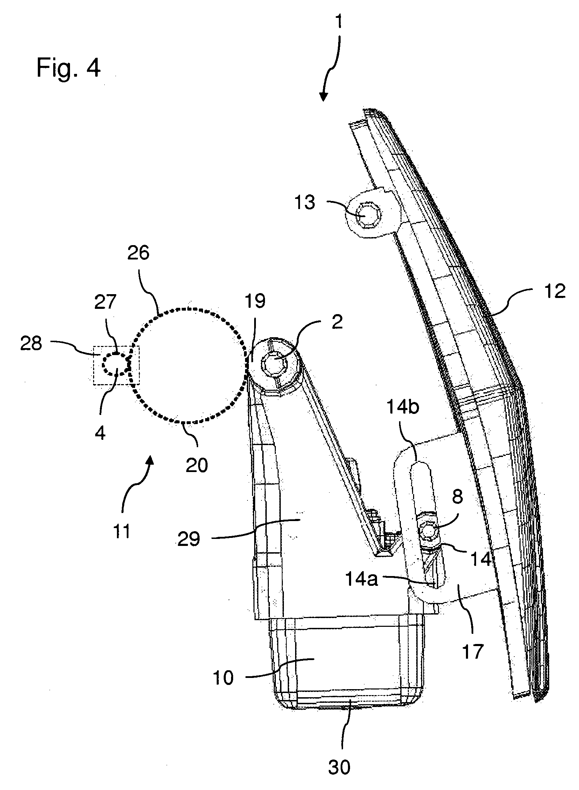

- Fig. 4: eine Seitenansicht einer vierten Ausführungsvariante der Vorrichtung für ein Kraftfahrzeug, mit einer Kameraeinheit, die nach dem erfindungsgemäßen Konstruktionsprinzip ausgebildet ist, wobei sich die Kameraeinheit zwischen der Ruheposition und der aktiven Position und das Schutzelement zwischen der Schließstellung und der Offenstellung befindet,

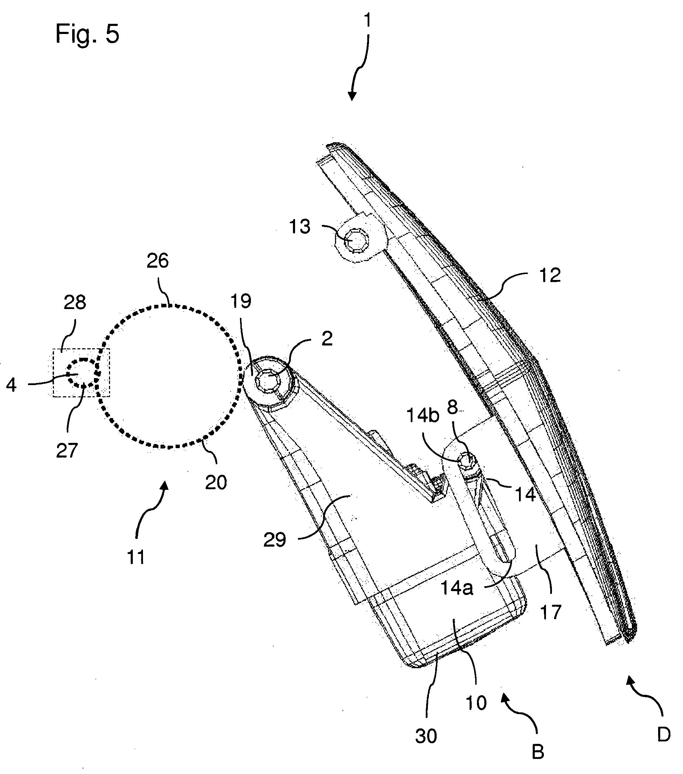

- Fig. 5: eine Seitenansicht der vierten Ausführungsvariante der Vorrichtung für ein Kraftfahrzeug gemäß Fig. 4, wobei sich die Kameraeinheit in der aktiven Position und das Schutzelement in der Offenstellung befindet,

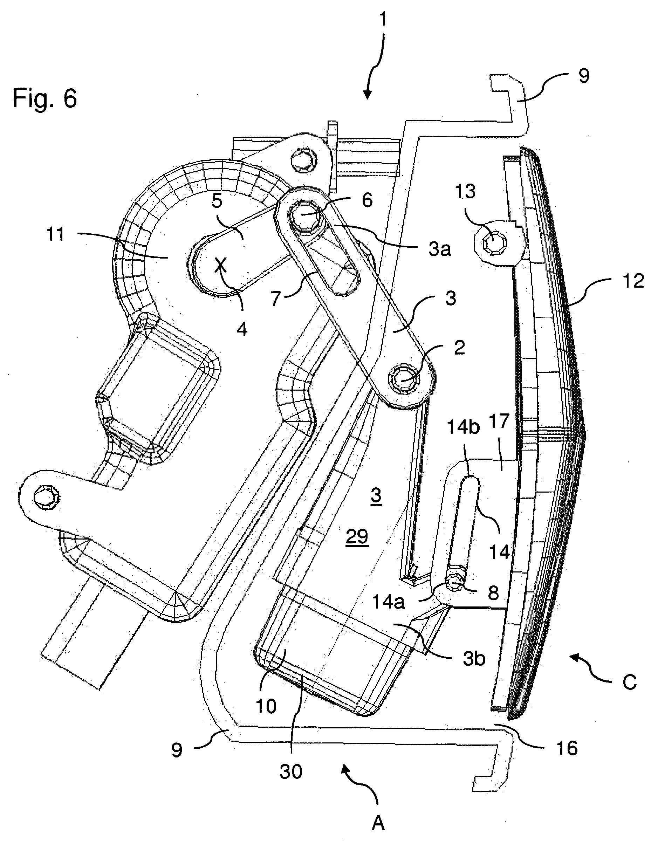

- Fig. 6: eine Seitenansicht einer fünften Ausführungsvariante der Vorrichtung für ein Kraftfahrzeug, mit einer bewegbar gelagerten Kameraeinheit, die nach dem erfindungsgemäßen Konstruktionsprinzip ausgebildet ist, wobei sich die Kameraeinheit in der Ruheposition und das Schutzelement in der Schließstellung befindet,

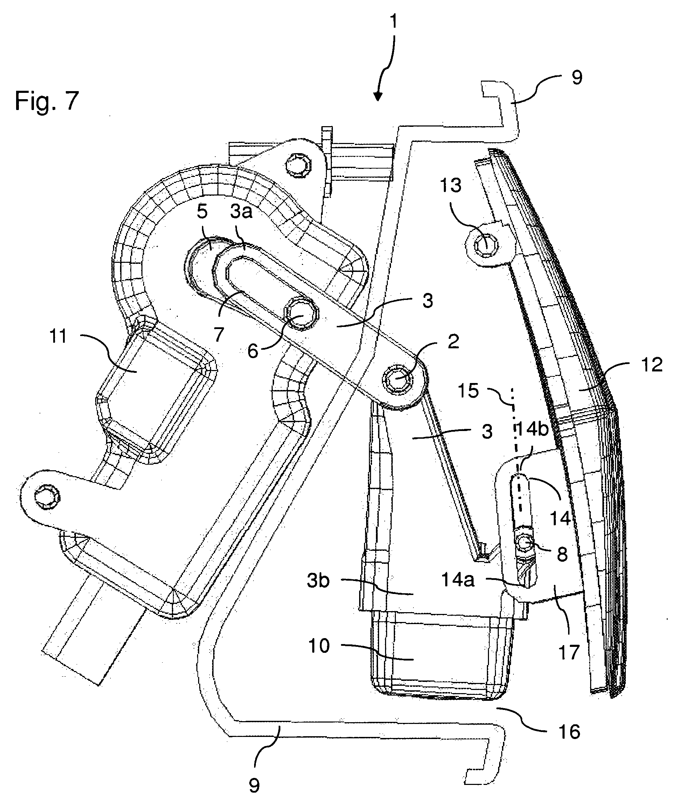

- Fig. 7: eine Seitenansicht der Vorrichtung gemäß Fig. 6, während der Bewegung der Kameraeinheit und des Schutzelementes und

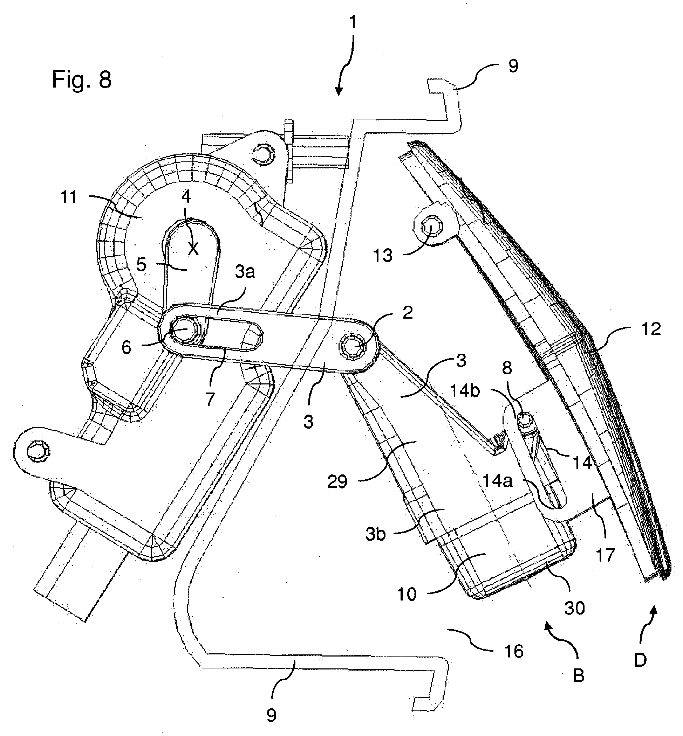

- Fig. 8: eine Seitenansicht der Vorrichtung gemäß Fig. 6, wobei sich die Kameraeinheit in der aktiven Position und das Schutzelement in der Offenstellung befindet.

Elemente mit gleicher Funktion und Wirkungsweise sind in den Figuren 1 bis 8 jeweils mit denselben Bezugszeichen versehen.

Fig. 1 zeigt eine Seitenansicht einer ersten möglichen Ausführungsvariante der Vorrichtung 1 für ein Kraftfahrzeug, mit einer Kameraeinheit 10, insbesondere einer bewegbar gelagerten Kameraeinheit 10, die nach dem erfindungsgemäßen Konstruktionsprinzip ausgebildet ist. Die Vorrichtung 1 ist dadurch gekennzeichnet, dass die Kameraeinheit 10 und das Schutzelement 12 beweglich aneinander angelenkt sind. Hierdurch folgt die Kameraeinheit 10 dem Schutzelement 12, wenn dieses über die Antriebseinheit 11 bewegt wird. Das Schutzelement 12 ist um eine erste Achse 13 dreh- beziehungsweise schwenkbar gelagert. Die erste Achse 13 ist fest an der Vorrichtung 1 oder an dem Kraftfahrzeug, an dem die Vorrichtung 1 angeordnet ist, angeordnet. Die Kameraeinheit 10 ist um eine zweite Achse 2 drehbar gelagert. Die Kameraeinheit 10 der Vorrichtung kann ein Kameragehäuse 29 aufweisen, dessen eines Ende an der zweiten Achse 2 drehbar gelagert ist und an dessen anderem Ende das Kameraobjektiv 30 sitzt. Die Antriebseinheit 11 weist einen Motor 28 und Getriebeeinheit 27 auf. Der Motor 28 überträgt ein Drehmoment auf die dritte Achse, 4, die insbesondere als Antriebswelle ausgebildet ist. Die dritte Achse beziehungsweise die Antriebswelle 4 gibt die Drehbewegung an die Getriebeeinheit 27 weiter, die in dieser Ausführungsvariante der Vorrichtung 1 eine Kurbel 5 aufweist. An dem der Antriebswelle 4 abgewandten Ende der Kurbel 5 ist über ein Gelenk 24 ein bewegbares Antriebselement 20, hier in Form einer Antriebsstange 21, angelenkt. Das andere Ende des bewegbaren Antriebselementes 20, das heißt der Antriebsstange 21, ist an dem Schutzelement 12 drehbeweglich mittels der Anlenkung 18 befestigt. Bei einer Drehung der Kurbel 5 der Antriebseinheit 11 wird die Antriebsstange 21 bewegt. Durch die Bewegung der Antriebsstange 21 kann das Schutzelement 12 zwischen der Schließstellung und der Offenstellung C hin und her bewegt werden. Durch die bewegliche Anlenkung der Kameraeinheit 10 und des Schutzelementes 12 aneinander, kann die Kameraeinheit 10 bei der Verschwenkung des Schutzelementes 12 um die erste Achse 13 gleichzeitig mit der Bewegung des Schutzelementes 12 mit bewegt werden. Die Antriebsstange 21 der Antriebseinheit 11 ist drehbeweglich über die Anlenkung 18 mit dem Schutzelement 12 verbunden, so dass diese das Schutzelement 12 in die Offenstellung D herausdrücken und in die Schließstellung reinziehen kann. Die Anlenkung der Kameraeinheit 10 und des Schutzelementes 12 aneinander ist durch eine Kulissenführung 14 an dem Schutzelement 12 und einem Führungselement 8 an der Kameraeinheit 10 hergestellt, wobei das Führungselement 8 in der Kulissenführung 14 entlang gleiten kann. Das Führungselement 8 der Kameraeinheit 10 steht in Wirkverbindung mit dem Schutzelement 12. Das heißt, das Führungselement 8 der Kameraeinheit 10 ist führbar in der Kulissenführung 14 des Schutzelementes 12 gelagert. Bei einer Bewegung des Schutzelementes 12 gleitet das Führungselement 8 in der Kulissenführung 14 des Schutzelementes 12 entlang und wird nur durch die Anschläge 14a, 14b begrenzt.

In einer nicht dargestellten Ausführungsvariante der Vorrichtung 1 kann die Antriebsstange 21 der Antriebseinheit 11 anstatt an dem Schutzelement 12 an der Kameraeinheit 10 angelenkt sein. In diesem Fall wird die Kameraeinheit 10 und nicht das Schutzelement 12 unmittelbar oder mittelbar von der Antriebseinheit 11 bewegt und leitet dann die Bewegung an das Schutzelement 12 weiter.

In der Fig. 2 ist in einer Seitenansicht eine zweite Ausführungsvariante der Vorrichtung 1 für ein Kraftfahrzeug, mit einer Kameraeinheit 10, insbesondere einer bewegbar gelagerten Kameraeinheit 10, die nach dem erfindungsgemäßen Konstruktionsprinzip ausgebildet ist, dargestellt. Die Antriebseinheit 11 weist in dieser Ausführungsvariante der Vorrichtung 1 für ein Kraftfahrzeug einen Nocken 22 auf. Der Nocken 22 ist exzentrisch um die dritte Achse 4, die insbesondere als Antriebswelle ausgebildet ist, angeordnet. Bei einer durch den Motor 28 ausgelösten Drehbewegung der Antriebseinheit 11 überträgt die Antriebswelle 4 eine Drehbewegung auf den Nocken 22. Die Kameraeinheit 10 ist mit einer Federkraft beaufschlagt, die durch das federelastische Element 23 ausgeübt wird. Dabei zieht das federelastische Element 23 die Kameraeinheit 10 gegen den Nocken 22, insbesondere gegen die Umlaufkante des Nockens 22, so dass die Kameraeinheit 10 permanent an dem Nocken 22 anliegt. Hierdurch folgt die Kameraeinheit 10 der Bewegung des Nockens 22, wobei der Nocken 22 derart in Wirkverbindung mit der Kameraeinheit 10 steht, der dieser durch seine exzentrische Bewegung die Kameraeinheit 10 zwischen der Ruheposition A und der aktiven Position B hin und her bewegen kann. Gleichzeitig wird das Schutzelement 12 zwischen der Schließstellung C und der Offenstellung D hin und her bewegt. Das federelastische Element 23 kann verschiedenartig in oder an der Vorrichtung 1 angeordnet sein. So kann das federelastische Element 23 an der Kameraeinheit 10, wie in Fig. 2 dargestellt, aber auch an dem Schutzelement 12 befestigt sein. Die Befestigung des federelastischen Elementes 23 an der Kameraeinheit 10 ist durch Bezugszeichen 25 dargestellt. Alternativ zu dem Nocken 22 kann eine exzentrisch gelagerte Scheibe vorgesehen sein. Das federelastische Element 23 kann als Druck- oder als Zugfeder ausgebildet sein. Das federelastische Element 23 kann beispielsweise eine Schraubenfeder sein. Alternativ kann das federelastische Element 23 eine Torsionsfeder, eine Biegefeder, wie eine Spiralfeder, eine Blattfeder oder eine Tellerfeder, sein. Ebenso kann das federelastische Element 23 eine Luftdruckfeder, eine Wickelfeder oder eine Elastomerfeder sein.

In Fig. 3 ist eine Seitenansicht einer dritten Ausführungsform der Vorrichtung 1 für ein Kraftfahrzeug, die nach dem erfindungsgemäßen Konstruktionsprinzip ausgebildet ist, dargestellt. In dieser Ausführungsvariante der Vorrichtung 1 wird das Schutzelement 12 durch ein Zahnrad 26 der Antriebseinheit 11 bewegt. Das heißt, das bewegbare Antriebselement 20 ist in dieser Ausführungsvariante der Vorrichtung 1 ein Zahnrad 21, das von einer Getriebeeinheit 27 der Antriebseinheit 11 angetrieben wird. Die Getriebeeinheit 27 leitet die von dem Motor 28 in die dritte Achse 3, das heißt die Antriebswelle, eingeleitete Drehbewegung an das Zahnrad 26 weiter. Das Zahnrad 26 steht mit einem Zahnrad 19 des Schutzelementes 12 in Eingriff. Das Zahnrad 19 des Schutzelementes 12 ist fest mit dem Schutzelement 12 verbunden. Dabei ist das Zahnrad 19 vorteilhafterweise konzentrisch um die erste Achse 13 drehbar gelagert. Hierdurch kann das Schutzelement 12 um die erste Achse 13 gedreht werden, wenn das fest an dem Schutzelement 12 angeordnete Zahnrad 19 durch das Zahnrad 26 der Antriebseinheit 11 gedreht wird. Je nachdem, ob das Zahnrad 26 der Antriebseinheit 11 in oder gegen den Uhrzeigersinn gedreht wird, wird das Schutzelement 12 geöffnet oder geschlossen.

Alternativ zu der Ausführungsvariante der Vorrichtung 1, bei der das Zahnrad 26 der Antriebseinheit 11 in ein Zahnrad 19 des Schutzelementes 12 eingreift, um dieses zu bewegen, kann das Zahnrad 26 der Antriebseinheit 11 in ein Zahnrad 19 an der Kameraeinheit 10 eingreifen, wie in Fig. 4 dargestellt. Das Zahnrad 19 der Kameraeinheit 10 ist konzentrisch um die zweite Achse 2 drehbar gelagert. Hierdurch kann die Kameraeinheit 10 durch eine Drehung des Zahnrades 19 um die zweite Achse 2 gedreht werden. In Fig. 4 befindet sich die Kameraeinheit 10 zwischen der Ruheposition A und der aktiven Position B und entsprechend das Schutzelement 12 zwischen der Schließstellung C und der Offenstellung D. Das bewegbare Antriebselement 20, das heißt das Zahnrad 26, der Antriebseinheit 11 steht in Eingriff mit dem Zahnrad 19 der Kameraeinheit 10. Je nach Drehrichtung des Motors 28 beziehungsweise der Antriebswelle 4 kann die Kameraeinheit 10 und damit das Schutzelement 12 geöffnet oder geschlossen werden.

Fig. 5 zeigt die Ausführungsvariante der Vorrichtung 1 gemäß Fig. 4 in der geöffneten Stellung. Das heißt, die Kameraeinheit 10 befindet sich in der aktiven Position B, in der sie das Umfeld des Fahrzeuges erfassen kann. Das Objektiv 30 der Kameräeinheit 10 ist zu dem Fahrzeugumfeld geschwenkt worden. Das Schutzelement 12 befindet sich in der Offenstellung D. In dieser Position wird eine weitere Verschwenkung der Kameraeinheit 10 und des Schutzelementes 12 durch die Verbindung zwischen der Kameraeinheit 10 und dem Schutzelement 12 unterbunden. Das als Nocken, Bolzen oder Kulissenstein ausgebildete Führungselement 8 der Kameraeinheit 10 schlägt an das der ersten Achse 13 zugewandte Ende 14b der Kulissenführung 14 des Schutzelementes 12 an. Durch den Anschlag ist die Lage beziehungsweise die eine Endposition des Schutzelementes 12 und der Kameraeinheit 10 vorgegeben. Andersherum ist die geschlossene Position der Kameraeinheit 10 und des Schutzelementes 12 durch das der ersten Achse 13 abgewandte Ende 14a der Kulissenführung 14 vorgegeben. Das der ersten Achse 13 abgewandte Ende 14a der Kulissenführung 14 bildet einen zweiten Anschlag.

Die Kulissenführung 14 des Schutzelementes 12 ist in einem Vorsprung 17 des Schutzelementes 12 angeordnet. Die Kulissenführung 14 ist geradlinig ausgebildet. Es ist auch denkbar, dass die Kulissenführung 14 eine zumindest teilweise gebogene Form aufweist.

Fig. 6 zeigt eine Seitenansicht einer fünften Ausführungsvariante der Vorrichtung 1 für ein Kraftfahrzeug mit einer bewegbar gelagerten Kameraeinheit 10, die nach dem erfindungsgemäßen Konstruktionsprinzip ausgebildet ist, wobei sich die Kameraeinheit 10 in der Ruheposition A und das Schutzelement 12 in der Schließstellung C befinden. Die Vorrichtung 1 weist eine Antriebseinheit 11 auf, die in Wirkverbindung mit einem Schwenkarm 3 der Vorrichtung 1 steht. Der Schwenkarm 3 verbindet die Antriebseinheit 11 mit dem Schutzelement 12. In dieser Ausführungsvariante der Vorrichtung 1 ist der Schwenkarm 3 zweiteilig ausgebildet, wobei beide Teile des Schwenkarms 3 fest miteinander verbunden sind. Der Schwenkarm 3 ist abgewinkelt ausgebildet und um eine zweite Achse 2 der Vorrichtung 1 drehbar gelagert angeordnet. Das der Antriebseinheit 11 zugewandte Ende des Schwenkarms 3, das sogenannte erst Ende 3a des Schwenkarms 3, weist eine Kulissenführung 7, in Form einer länglichen Aussparung, insbesondere einer länglichen Nut, auf. Die Antriebseinheit 11 weist eine um eine dritte Achse 4 drehbar gelagerte Kurbel 5 auf, an deren freien Ende ein Führungselement 6 angeordnet ist. Das Führungselement 6 der Kurbel 5 ist insbesondere als ein an der Kurbel 5 hervorstehender Nocken oder Kulissenstein ausgebildet. Die Kurbel 5 beziehungsweise das Führungselement 6 der Antriebseinheit 11 sind dabei derart mit dem Schwenkarm 3 verbunden, dass das Führungselement 6 in der Kulissenführung 7 des Schwenkarms 3 gleiten kann, so dass bei einer Bewegung der Kurbel 5 und damit des Führungselementes 6 der Schwenkarm 3 um die zweite Achse 2 gedreht werden kann. An dem dem Schutzelement 12 zugewandten Ende des Schwenkarms 3, das heißt dem sogenannten zweiten Ende 3b des Schwenkarms 3, ist die Kameraeinheit 10 angeordnet. In dieser fünften Ausführungsvariante ist die Kameraeinheit 10 stirnseitig an dem zweiten Ende 3b des Schenkarms 3 angeordnet. An der Seite des zweiten Endes 3b des Schwenkarms 3 weist der Schwenkarm 3 ein Führungselement 8 auf, das insbesondere als ein Nocken oder ein Kulissenstein ausgebildet ist. Dieses Führungselement 8 des Schwenkarms 3 steht in Wirkverbindung mit dem Schutzelement 12. Das heißt, das Führungselement 8 ist führbar in einer Kulissenführung 14 des Schutzelementes 12 gelagert. Bei einer Bewegung des Schwenkarms 3 gleitet das Führungselement 8 in der Kulissenführung 14 des Schutzelementes 12. Das Schutzelement 12 bildet den Abschluss der Vorrichtung 1. Das heißt, in der in Fig. 6 dargestellten Schließstellung des Schutzelementes 12, deckt das Schutzelement 12 die restlichen Teile der Vorrichtung 1 vollständig ab, so dass diese sicher vor äußeren Einflüssen, wie beispielsweise Stößen oder Schlägen, geschützt sind. Die Vorrichtung 1 weist vorteilhafterweise ein Gehäuseelemente 9, in der zumindest Teile der Vorrichtung 1 angeordnet sind, auf. Hierdurch sind diese Teile, insbesondere der Schwenkarm 3 und die Kameraeinheit 10 geschützt angeordnet. Damit die Kameraeinheit 10 in eine aktive Position bewegt werden kann, weist das Gehäuseelement 9 eine Öffnung 16 auf. In der Schließstellung deckt das Schutzelement 12 die Öffnung 16 vollständig ab, so dass die Kameraeinheit 10 und die restlichen Bauteile der Vorrichtung 1 geschützt sind.

In der Schließstellung des Schutzelementes 12 schlägt das Führungselement 8 des Schwenkarms 3 an das der ersten Achse 13 abgewandten Ende 14a der Kulissenführung 14 des Schutzelementes 12 an. Hierdurch ist die Schließstellung des Schutzelementes 12 definiert vorgegeben. Eine weitere Bewegung, insbesondere eine weitere Drehung, des Schutzelementes 12 wird durch den Anschlag des Führungselementes 8 des Schwenkarms 3 an dem der ersten Achse 13 abgewandten Ende 14a der Kulissenführung 14 verhindert. Das Schutzelement 12 ist um die erste Achse 13 drehbar gelagert. Die Kulissenführung 14 des Schutzelementes 12 ist vorzugsweise an einem Vorsprung 17 des Schutzelementes 12 vorgesehen. Dieser Vorsprung 17 ragt in Richtung des Schwenkarms 3 der Vorrichtung 1.

In der Fig. 7 ist die gleiche Ausführungsvariante der Vorrichtung gemäß Fig. 6 dargestellt, wobei sich die Kameraeinheit 10 in einer Position zwischen der Ruheposition A, wie in Fig. 6 dargestellt, und der aktiven Position B, wie in Fig. 8 dargestellt, befindet. Gleiches gilt für das Schutzelement 12. Dieses befindet sich in der Fig. 7 zwischen der Schließstellung, wie in Fig. 6 dargestellt, und der Offenstellung, wie in Fig. 8 dargestellt. Das Führungselement 6 der Kurbel 5 der Antriebseinheit 11 ist entlang der Kulissenführung 7 des Schwenkarms 3 in Richtung der zweiten Achse 2 geglitten. Der Schwenkarm 3 wird durch die Bewegung des Führungselementes 6 der Kurbel 5 um die zweite Achse 2 gedreht, so dass das Führungselement 8 des Schwenkarms 3 das Schutzelement 12 bewegt, insbesondere um die erste Achse 13 dreht. Dabei gleitet das Führungselement 8 des Schwenkarms 3, das insbesondere als Nocken oder als Kulissenstein ausgebildet ist, in der Kulissenführung 14 des Schutzelementes 12, wodurch dieses bewegt wird. Die Längsachse 15 der Kulissenführung 14 des Schutzelementes 12 ist dabei insbesondere derart ausgebildet, dass diese auf die erste Achse 13 gerichtet ist. Durch eine derartige Ausgestaltung des Schutzelementes 12 beziehungsweise des Schwenkarms 3 der Vorrichtung 1 ist gewährleistet, dass das Führungselement 6 der Kurbel 5 sowie das Führungselement 8 des Schwenkarms 3 optimal in den entsprechenden Kulissenführungen 7 beziehungsweise 14 entlang gleiten kann.

In der Fig. 8 ist eine weitere Seitenansicht der Vorrichtung gemäß Fig. 6 dargestellt, wobei sich die Kameraeinheit 10 in der aktiven Position B und das Schutzelement 12 in der Offenstellung befinden. Die Kameraeinheit 10 ist derart weit verschwenkt, dass diese durch die Öffnung 16 hinausgeführt ist, das heißt in eine aktive Position B geführt ist. In dieser aktiven Position B kann die Kameraeinheit 10 zur Bilderfassung eingesetzt werden. Das Führungselement 8 des Schwenkarms 3 ist entlang der Kulissenführung 14 des Schutzelementes 12 derart weit entlang geglitten, bis eine weitere Bewegung des Schutzelementes 12 durch den Anschlag des Führungselementes 8 an dem der ersten Achse 13 zugewandten Ende 14b der Kulissenführung 14 begrenzt worden ist. Das heißt, die Kulissenführung 14, insbesondere das als Anschlag dienende Ende 14b der Kulissenführung 14, begrenzt eine weitere Drehung des Schutzelementes 12 um die erste Achse 13. Die spezielle Ausgestaltung und Anordnung der Kulissenführung 14 des Schutzelementes 12 sowie die Drehung der Schwenkachse 13 um die zweite Achse 2 sorgen dafür, dass das Schutzelement 12 in der Offenstellung einer sichere und stabile Position einnimmt. In dieser Position der Vorrichtung 1 schlägt das Führungselement 6 der Kurbel 5 an das der zweiten Achse 2 abgewandte Ende der Kulissenführung 7 des Schwenkarms 3 an. In der Öffenstellung des Schutzelementes 12, in der sich die Kameraeinheit 10 in der aktiven Position befindet, verharrt die Kurbel 5 der Antriebseinheit 11. Wird die Kurbel 5 der Antriebseinheit 11 entgegen dem Uhrzeigersinn zurückgedreht, verdreht sich der Schwenkarm 3 im Uhrzeigersinn, so dass dadurch das Schutzelement 12 von der Offenstellung in eine Schließstellung, wie in Fig. 6 dargestellt, und gleichzeitig die Kameraeinheit 10 aus der aktiven Position B in die Ruheposition A, wie ebenfalls in Fig. 6 dargestellt, zurückgeführt werden können.

In den fünf verschiedenen Ausführungsvarianten weist die Antriebseinheit 11 vorteilhafterweise einen Motor auf. Bevorzugt kann die Antriebseinheit 11 einen Stellantrieb aufweisen, über den die Kameraeinheit 10 und das Schutzelement 12 bewegt werden können. Der Motor kann beispielsweise elektrisch, pneumatisch, hydraulisch oder magnetisch betrieben werden. Die Kameraeinheit 10 weist vorteilhafterweise ein Kameragehäuse 29 und ein Objektiv 30 auf. Das Kameragehäuse 30 kann, wie in den Fig. 6 bis 8 dargestellt Teil des Schwenkarms 3 sein.

Vorteilhaft bei der Vorrichtung für ein Kraftfahrzeug mit einer bewegbar gelagerten Kameraeinheit ist, dass diese, im Vergleich zu den bekannten derartigen Vorrichtungen weniger konstruktive Bauelemente benötigt. Durch die bewegliche Anlenkung der Kameraeinheit und des Schutzelementes aneinander, kann die Vorrichtung einfach und kostengünstig ausgebildet werden. Es ist nur eine einzige Antriebseinheit erforderlich, um sowohl die Kameraeinheit, als auch das Schutzelement zu bewegen, wobei es egal ist, ob die Antriebseinheit mit der Kameraeinheit oder mit dem Schutzelement unmittelbar oder mittelbar in Wirkverbindung steht. Durch die bewegliche Verbindung der Kameraeinheit und des Schutzelementes aneinander, werden diese bei einer Bewegung eines der Elemente immer relativ zueinander bewegt. So kann durch die spezielle Anordnung der Schwenkarms, der die Antriebseinheit und das Schutzelement miteinander verbindet, und der Kameraeinheit an dem Schwenkarm die Kameraeinheit gleichzeitig mit der Öffnung des Schutzelementes ausgefahren beziehungsweise mit der Schließung des Schutzelementes eingefahren werden. Zur Bewegung der Kameraeinheit und des Schutzelementes ist lediglich ein einziger Schwenkarm vorgesehen, der durch eine Antriebseinheit bewegt wird. Die spezielle Ausgestaltung beziehungsweise Anordnung des Führungselementes des Schwenkarms und der Kulissenführung des Schutzelementes sorgen dafür, dass die Vorrichtung und insbesondere die Kameraeinheit diebstahlgeschützt angeordnet sind.

Sowohl in eingefahrener Position der Kameraeinheit, als auch in ausgefahrener Position der Kameraeinheit liegt eine stabile Lage der Kameraeinheit beziehungsweise des Schutzelementes vor. In der eingefahrenen Position der Kameraeinheit, das heißt der Ruheposition der Kameraeinheit, kann das geschlossene Schutzelement von außen nicht manuell bewegt werden, wodurch ein wirksamer Diebstahlschutz der Kameraeinheit gewährleistet ist.

### Bezugszeichenliste

- 1: Vorrichtung
- 2: zweite Achse
- 3: Schwenkarm
- 3a: erstes Ende des Schwenkarms
- 3b: zweites Ende des Schwenkarms
- 4: dritte Achse
- 5: Kurbel
- 6: Führungselement der Kurbel
- 7: Kulissenführung des Schwenkarms
- 8: Führungselement des Schwenkarms
- 9: Gehäuseelement
- 10: Kameraeinheit
- 11: Antriebseinheit
- 12: Schutzelement
- 13: erste Achse
- 14: Kulissenführung
- 14a: ersten Achse abgewandte Ende der Kulissenführung
- 14b: ersten Achse zugewandte Ende der Kulissenführung
- 15: Längsachse der Kulissenführung des Schutzelementes
- 16: Öffnung
- 17: Vorsprung des Schutzelementes
- 18: Anlenkung
- 19: Zahnrad
- 20: bewegbares Antriebselement
- 21: Antriebsstange
- 22: Nocken
- 23: federelastisches Element
- 24: Gelenk
- 25: Befestigung des federelastischen Elementes
- 26: Zahnrad
- 27: Getriebeeinheit
- 28: Motor
- 29: Kameragehäuse
- 30: Objektiv der Kameraeinheit

- A: Ruheposition der Kameraeinheit
- B: aktive Position der Kameraeinheit
- C: Schließstellung
- D: Offenstellung

## Patentansprüche

1. Vorrichtung (1) für ein Kraftfahrzeug, mit einer Kameraeinheit (10), die in eine Ruheposition (A) und in eine aktive Position (B) bringbar ist, und einem Schutzelement (12), das in eine Schließstellung (C) und in eine Offenstellung (D) führbar ist, wobei in der Schließstellung (C) des Schutzelementes (12) die Kameraeinheit (10) sich in ihrer Ruheposition (A) von außen unzugänglich hinter dem Schutzelement (12) und in der Offenstellung (D) des Schutzelementes (12) die Kameraeinheit (10) sich in der aktiven Position (B) zur Bilderfassung befindet, und mit einer Antriebseinheit (11) zur Bewegung der Kameraeinheit (10) und des Schutzelementes (12), **dadurch gekennzeichnet, dass** die Kameraeinheit (10) und das Schutzelement (12) beweglich aneinander angelenkt sind, und
dass das Schutzelement (12) um eine erste Achse (13) drehbar und/oder schwenkbar angeordnet und dass die Kameraeinheit (10) um eine zweite Achse (2) drehbar gelagert ist
und wobei die Antriebseinheit (11) zur Bewegung der Kameraeinheit (10) und des Schutzelementes (12) mittelbar oder unmittelbar an der Kameraeinheit (10) oder an dem Schutzelement (12) angreift.

2. Vorrichtung (1) nach Anspruch 1,
**dadurch gekennzeichnet,**
**dass** die Antriebseinheit (11) derart mit dem Schutzelement (12) in Wirkverbindung steht, dass bei einer Bewegung des Schutzelementes (12) zwischen der Schließstellung (C) und der Offenstellung (D) sich gleichzeitig die Kameraeinheit (10) relativ zum Schutzelement (12) bewegt, oder dass die Antriebseinheit (11) derart mit der Kameraeinheit (10) in Wirkverbindung steht, dass bei einer Bewegung der Kameraeinheit (10) zwischen der Ruheposition (A) und der aktiven Position (B) sich gleichzeitig das Schutzelement (12) relativ zur Kameraeinheit (10) bewegt.

3. Vorrichtung (1) wenigstens einem der vorhergehenden Ansprüche 1 bis 2,
**dadurch gekennzeichnet,**
**dass** die Antriebseinheit (11) ein bewegbares Antriebselement (20) aufweist, das zur Bewegung der Kameraeinheit (10) oder des Schutzelementes (12) mit der Kameraeinheit (10) oder dem Schutzelement (12) in Wirkverbindung steht, wobei insbesondere das bewegbare Antriebselement (20) der Antriebseinheit (11) wenigstens eine Antriebsstange (21) ist, die an einer Anlenkeinrichtung (18) an der Kameraeinheit (10) oder an dem Schutzelement (12) dreh- und/oder schwenkbeweglich (12) befestigt ist, wobei die wenigstens eine Antriebsstange (21) durch die Antriebseinheit (11) bewegbar ist.

4. Vorrichtung (1) nach Anspruch 3,
**dadurch gekennzeichnet,**
**dass** das bewegbare Antriebselement (20) der Antriebseinheit (11) wenigstens ein Nocken (22) oder wenigstens eine exzentrisch angeordnete Scheibe ist, der/die zur Bewegung der Kameraeinheit (10) und des Schutzelementes (12) an der Kameraeinheit (10) oder an dem Schutzelement (12) anliegt, und insbesondere dass ein federelastisches Element (23) vorgesehen ist, das an der Kameraeinheit (10) oder an dem Schutzelement (12) befestigt ist und das die Kameraeinheit (10) und das Schutzelement (12) gegen den wenigstens einen Nocken (22) oder die wenigstens eine exzentrisch angeordnete Scheibe vorspannt, so dass entweder die Kameraeinheit (10) oder das Schutzelement (12) permanent an dem wenigstens einen Nocken (22) oder der wenigstens einen exzentrisch angeordneten Scheibe anliegt.

5. Vorrichtung (1) nach Anspruch 3,
**dadurch gekennzeichnet,**
**dass** das bewegbare Antriebselement (20) der Antriebseinheit (11) wenigstens ein Zahnrad (26) ist, das zur Bewegung der Kameraeinheit (10) und des Schutzelementes (12) mit einem Zahnrad (19), dass fest mit der Kameraeinheit (10) oder dem Schutzelement (12) verbunden ist, in Eingriff steht, wobei insbesondere das Zahnrad (19) an der Kameraeinheit (10) konzentrisch um die zweite Achse (2) der Vorrichtung (1) drehbar gelagert angeordnet ist oder dass das Zahnrad (19) an dem Schutzelement (12) konzentrisch um die erste Achse (13) der Vorrichtung (1) drehbar gelagert angeordnet ist.

6. Vorrichtung (1) nach wenigstens einem der vorhergehenden Ansprüche 3 bis 5,
**dadurch gekennzeichnet,**
**dass** die Antriebseinheit (11) eine Getriebeeinheit (27) aufweist, die zur Bewegung des Antriebselementes (20) mit diesem in Wirkverbindung steht.

7. Vorrichtung (1) nach wenigstens einem der vorhergehenden Ansprüche 1 bis 6,
**dadurch gekennzeichnet,**
**dass** die Kameraeinheit (10) ein Führungselement (8) aufweist, das in einer Kulissenführung (14) des Schutzelementes (12) führbar gehalten ist, oder dass das Schutzelement (12) ein Führungselement aufweist, das in einer Kulissenführung der Kameraeinheit (10) führbar gehalten ist.

8. Vorrichtung (1) nach wenigstens einem der vorhergehenden Ansprüche 1 bis 7,
**dadurch gekennzeichnet,**
**dass** die Antriebseinheit (11) mit der Kameraeinheit (10) oder dem Schutzelement (12) derart in Wirkverbindung steht, dass in der Schließstellung (C) und/oder Offenstellung (D) des Schutzelementes (12) eine Bewegung des Schutzelementes (12) durch Einwirkung einer von außen manuell ausgeübten Kraft auf das Schutzelement (12) nicht möglich ist.

9. Vorrichtung (1) nach wenigstens einem der vorhergehenden Ansprüche 1 bis 8,
**dadurch gekennzeichnet,**
**dass** die Kameraeinheit (10) an einem bewegbar gelagerten Schwenkarm (3) angeordnet ist, der die Antriebseinheit (11) mit dem Schutzelement (12) verbindet, wobei durch eine von der Antriebseinheit (11) ausgelöste Bewegung des Schwenkarms (3) das Schutzelement (12) in die Schließstellung (C) und in die Offenstellung (D) sowie die Kameraeinheit (10) in die Ruheposition (A) und in die aktive Position (B) führbar sind, wobei insbesondere die Antriebseinheit (11) eine um eine dritte Achse (4) drehbar gelagerte Kurbel (5) aufweist, dass an der Kurbel (5) ein Führungselement (6) angeordnet ist, das parallel zur dritten Achse (4) verläuft und bei einer Drehbewegung der Kurbel (5) kreisförmig um die dritte Achse (4) führbar ist, und dass das Führungselement (6) zur Bewegung des Schwenkarms (3) mit dem Schwenkarm (3) wirkverbunden ist.

10. Vorrichtung (1) nach Anspruch 9,
**dadurch gekennzeichnet,**
**dass** das der Antriebseinheit (11) zugewandte Ende (3a) des Schwenkarms (3) eine Kulissenführung (7) zur Bewegung des Schwenkarms (3) durch die Antriebseinheit (11), insbesondere zur Führung des Führungselementes (6) der Kurbel (5), aufweist.

11. Vorrichtung (1) nach wenigstens einem der vorhergehenden Ansprüche 9 oder 10,
**dadurch gekennzeichnet,**
**dass** das dem Schutzelement (12) zugewandte Ende (3b) des Schwenkarms (3) ein Führungselement (8) aufweist, das in einer Kulissenführung (14) des Schutzelementes (12) führbar gehalten ist, wobei insbesondere in der Schließstellung des Schutzelementes (12) das Führungselement (8) des Schwenkarms (3) an das der ersten Achse (13) abgewandte Ende (14a) der Kulissenführung (14) des Schutzelementes (12) anschlägt und dass in der Offenstellung des Schutzelementes (12) das Führungselement (8) des Schwenkarms (3) an das der ersten Achse (13) zugewandte Ende (14b) der Kulissenführung (14) des Schutzelementes (12) anschlägt.

12. Vorrichtung (1) nach wenigstens einem der vorhergehenden Ansprüche 9 bis 11,
**dadurch gekennzeichnet,**
**dass** das Führungselement (6) der Kurbel (5) und/oder das Führungselement (8) des zweiten Endes (3b) des Schwenkarms (3) ein Kulissenstein oder ein Nocken ist.

13. Vorrichtung (1) nach wenigstens einem der vorhergehenden Ansprüche 10 bis 12,
**dadurch gekennzeichnet,**
**dass** die Kulissenführung (7) des Schwenkarms (3) geradlinig und/oder gebogen ausgebildet ist und/oder dass die Kulissenführung (14) des Schutzelementes (12) geradlinig und/oder gebogen ausgebildet ist, wobei insbesondere die Kulissenführung (14) des Schutzelementes (12) geradlinig ausgebildet ist und die Längsachse (15) der Kulissenführung (14) des Schutzelementes (12) auf oder annähernd auf die erste Achse (13) gerichtet ist.

14. Vorrichtung (1) nach wenigstens einem der vorhergehenden Ansprüche 11 bis 13,
**dadurch gekennzeichnet,**
**dass** das Führungselement (8) des Schwenkarms (3) seitlich an dem zweiten Ende (3b) des Schwenkarms (3) angeordnet ist.

15. Vorrichtung (1) nach wenigstens einem der vorhergehenden Ansprüche 9 bis 14,
**dadurch gekennzeichnet,**
**dass** das Führungselement (6) der Kurbel (5) drehbar an der Kurbel (5) und/oder das Führungselement (8) an dem dem Schutzelement (12) zugewandten Ende (3b) des Schwenkarms (3) drehbar an dem Schwenkarm (3) angeordnet ist/sind.

16. Kraftfahrzeug mit einer Kameraeinheit,
**dadurch gekennzeichnet,**
**dass** das Fahrzeug zumindest eine Vorrichtung (1) nach wenigstens einem der vorhergehenden Ansprüche 1 bis 15 aufweist.

## Claims

1. A device (1) for a motor vehicle, having a camera unit (10), which can be brought into a rest position (A) and into an active position (B), and having a protective element (12), which can be guided into a closed position (C) and into an open position (D), the camera unit (10) being in the rest position (A) thereof inaccessible from the outside behind the protective element (12) when the protective element (12) is in the closed position (C), and the camera unit (10) being in the active position (B) for capturing images when the protective element (12) is in the open position (D), and having a drive unit (11) for moving the camera unit (10) and the protective element (12),
**characterised in that**
the camera unit (10) and the protective element (12) are movably articulated to each other, and
the protective element (12) is arranged such that it can rotate and/or pivot about a first axis (13), and the camera unit (10) is mounted such that it can rotate about a second axis (2)
and wherein the drive unit (11) acts directly or indirectly on the camera unit (10) or on the protective element (12) for the movement of the camera unit (10) and the protective element (12).

2. The device (1) according to claim 1,
**characterised in that**
the drive unit (11) is operatively connected to the protective element (12) in such a manner that, when the protective element (12) moves between the closed position (C) and the open position (D), the camera unit (10) moves relative to the protective element (12) at the same time, or the drive unit (11) is operatively connected to the camera unit (10) in such a manner that, when the camera unit (10) moves between the rest position (A) and the active position (B), the protective element (12) moves relative to the camera unit (10) at the same time.

3. The device (1) according to at least one of the preceding claims 1 to 2,
**characterised in that**
the drive unit (11) has a movable drive element (20), which is operatively connected to the camera unit (10) or to the protective element (12) in order to move the camera unit (10) or the protective element (12), wherein in particular the movable drive element (20) of the drive unit (11) is at least one drive rod (21), which is fastened rotatably and/or pivotably (12) to an articulation device (18) on the camera unit (10) or on the protective element (12), wherein the at least one drive rod (21) can be moved by the drive unit (11).

4. The device (1) according to claim 3,
**characterised in that**
the movable drive element (20) of the drive unit (11) is at least one cam (22) or at least one eccentrically arranged disc, which bears against the camera unit (10) or against the protective element (12) in order to move the camera unit (10) and the protective element (12), and in particular a resilient element (23) is provided, which is fastened to the camera unit (10) or to the protective element (12) and which prestresses the camera unit (10) and the protective element (12) against the at least one cam (22) or the at least one eccentrically arranged disc, so that either the camera unit (10) or the protective element (12) bears continuously against the at least one cam (22) or the at least one eccentrically arranged disc.

5. The device (1) according to claim 3,
**characterised in that**
the movable drive element (20) of the drive unit (11) is at least one gear (26), which meshes with a gear (19) that is connected permanently to the camera unit (10) or protective element (12), in order to move the camera unit (10) and protective element (12), wherein in particular the gear (19) is mounted on the camera unit (10) concentrically such that said gear can rotate about the second axis (2) of the device (1), or the gear (19) is mounted on the protective element (12) concentrically such that said gear can rotate about the first axis (13) of the device (1).

6. The device (1) according to at least one of the preceding claims 3 to 5,
**characterised in that**
the drive unit (11) has a gearing unit (27), which is operatively connected to the drive element (20) in order to move same.

7. The device (1) according to at least one of the preceding claims 1 to 6,
**characterised in that**
the camera unit (10) has a guide element (8), which is held such that it can be guided in a slotted guide (14) of the protective element (12), or the protective element (12) has a guide element, which is held such that it can be guided in a slotted guide of the camera unit (10).

8. The device (1) according to at least one of the preceding claims 1 to 7,
**characterised in that**
the drive unit (11) is operatively connected to the camera unit (10) or to the protective element (12) in such a manner that, when the protective element (12) is in the closed position (C) and/or open position (D), it is not possible for the protective element (12) to be moved by a force exerted manually on the protective element (12) from the outside.

9. The device (1) according to at least one of the preceding claims 1 to 8,
**characterised in that**
the camera unit (10) is arranged on a movably mounted pivot arm (3), which connects the drive unit (11) to the protective element (12), wherein the protective element (12) can be guided into the closed position (C) and into the open position (D) and the camera unit (10) can be guided into the rest position (A) and into the active position (B) by a movement of the pivot arm (3) triggered by the drive unit (11), wherein in particular the drive unit (11) has a crank (5), which is mounted such that it can rotate about a third axis (4), a guide element (6) is arranged on the crank (5), which guide element runs parallel to the third axis (4) and can be guided in a circular manner about the third axis (4) during a rotary movement of the crank (5), and the guide element (6) is operatively connected to the pivot arm (3) in order to move the pivot arm (3).

10. The device (1) according to claim 9,
**characterised in that**
the end (3a) of the pivot arm (3) that faces the drive unit (11) has a slotted guide (7) for moving the pivot arm (3) by the drive unit (11), in particular for guiding the guide element (6) of the crank (5).

11. The device (1) according to at least one of the preceding claims 9 or 10,
**characterised in that**
the end (3b) of the pivot arm (3) that faces the protective element (12) has a guide element (8), which is held such that it can be guided in a slotted guide (14) of the protective element (12), wherein in particular the guide element (8) of the pivot arm (3) stops against the end (14a) of the slotted guide (14) of the protective element (12) that faces away from the first axis (13) when the protective element (12) is in the closed position, and the guide element (8) of the pivot arm (3) stops against the end (14b) of the slotted guide (14) of the protective element (12) that faces the first axis (13) when the protective element (12) is in the open position.

12. The device (1) according to at least one of the preceding claims 9 to 11,
**characterised in that**
the guide element (6) of the crank (5) and/or the guide element (8) of the second end (3b) of the pivot arm (3) is a sliding block or a cam.

13. The device (1) according to at least one of the preceding claims 10 to 12,
**characterised in that**
the slotted guide (7) of the pivot arm (3) is straight and/or curved and/or the slotted guide (14) of the protective element (12) is straight and/or curved, wherein in particular the slotted guide (14) of the protective element (12) is straight and the longitudinal axis (15) of the slotted guide (14) of the protective element (12) is directed towards or approximately towards the first axis (13).

14. The device (1) according to at least one of the preceding claims 11 to 13,
**characterised in that**
the guide element (8) of the pivot arm (3) is arranged laterally on the second end (3b) of the pivot arm (3).

15. The device (1) according to at least one of the preceding claims 9 to 14,
**characterised in that**
the guide element (6) of the crank (5) is arranged rotatably on the crank (5) and/or the guide element (8) on the end (3b) of the pivot arm (3) that faces the protective element (12) is arranged rotatably on the pivot arm (3).

16. A motor vehicle having a camera unit,
**characterised in that**
the vehicle has at least one device (1) according to at least one of the preceding claims 1 to 15.

## Revendications

1. Dispositif (1) destiné à un véhicule automobile, comprenant une unité à caméra (10) pouvant être amenée à un emplacement de repos (A) et à un emplacement actif (B) ; un élément de protection (12) pouvant être guidé jusqu'à une position de fermeture (C) et jusqu'à une position d'ouverture (D), sachant que, dans la position de fermeture (C) de l'élément de protection (12), l'unité à caméra (10) occupe son emplacement de repos (A) derrière ledit élément de protection (12), en étant inaccessible depuis l'extérieur, et que, dans la position d'ouverture (D) dudit élément de protection (12), ladite unité à caméra (10) occupe l'emplacement actif (B) dévolu à la capture d'images ; et une unité d'entraînement (11) conçue pour imprimer des mouvements à ladite unité à caméra (10) et audit élément de protection (12), **caractérisé par le fait que** l'unité à caméra (10) et l'élément de protection (12) sont articulés l'un sur l'autre avec mobilité,
que ledit élément de protection (12) est installé à rotation et/ou à pivotement autour d'un premier axe (13), et que ladite unité à caméra (10) est montée à rotation autour d'un deuxième axe (2),
l'unité d'entraînement (11) venant en prise avec l'unité à caméra (10) ou avec l'élément de protection (12), indirectement ou directement, en vue de mouvoir ladite unité à caméra (10) et ledit élément de protection (12).

2. Dispositif (1) selon la revendication 1,
**caractérisé par le fait**
**que** l'unité d'entraînement (11) est en liaison opérante avec l'élément de protection (12) de façon telle que, lors d'un mouvement dudit élément de protection (12) entre la position de fermeture (C) et la position d'ouverture (D), l'unité à caméra (10) se meuve en simultanéité par rapport audit élément de protection (12) ; ou par le fait que ladite unité d'entraînement (11) est en liaison opérante avec ladite unité à caméra (10) de façon telle que, lors d'un mouvement de ladite unité à caméra (10) entre l'emplacement de repos (A) et l'emplacement actif (B), ledit élément de protection (12) se meuve en simultanéité par rapport à ladite unité à caméra (10).

3. Dispositif (1) selon au moins l'une des revendications 1 à 2 précédentes,
**caractérisé par le fait**
**que** l'unité d'entraînement (11) comporte un élément mobile d'entraînement (20) qui est en liaison opérante avec l'unité à caméra (10) ou avec l'élément de protection (12), en vue de mouvoir ladite unité à caméra (10) ou ledit élément de protection (12), sachant notamment que ledit élément mobile d'entraînement (20) de ladite unité d'entraînement (11) se présente au moins comme une tige d'entraînement (21) fixée à ladite unité à caméra (10) ou audit élément de protection (12) au niveau d'un système (18) de rattachement articulé, avec mobilité(s) rotatoire et/ou pivotante, ladite tige d'entraînement (21), à présence minimale, pouvant être mise en mouvement par l'intermédiaire de ladite unité d'entraînement (11).

4. Dispositif (1) selon la revendication 3,
**caractérisé par le fait**
**que** l'élément mobile d'entraînement (20) de l'unité d'entraînement (11) se présente au moins comme une came (22) ou au moins comme un disque à agencement excentré, en applique contre l'unité à caméra (10) ou contre l'élément de protection (12), en vue de mouvoir ladite unité à caméra (10) et ledit élément de protection (12) ; et notamment par le fait qu'il est prévu un élément (23) doué d'élasticité, qui est fixé à ladite unité à caméra (10) ou audit élément de protection (12) et qui précontraint ladite unité à caméra (10) et ledit élément de protection (12) contre ladite came (22) à présence minimale, ou contre ledit disque à présence minimale agencé de manière excentrée, de sorte que soit ladite unité à caméra (10), soit ledit élément de protection (12), est appliqué(e) en permanence contre ladite came (22) à présence minimale, ou contre ledit disque à présence minimale agencé de manière excentrée.

5. Dispositif (1) selon la revendication 3,
**caractérisé par le fait**
**que** l'élément mobile d'entraînement (20) de l'unité d'entraînement (11) se présente au moins comme une roue dentée (26) en prise avec une roue dentée (19) reliée rigidement à l'unité à caméra (10) ou à l'élément de protection (12), en vue de mouvoir ladite unité à caméra (10) et ledit élément de protection (12), sachant notamment que ladite roue dentée (19) est implantée concentriquement sur ladite unité à caméra (10), avec montage rotatif autour du deuxième axe (2) du dispositif (1) ; ou que ladite roue dentée (19) est implantée concentriquement sur ledit élément de protection (12), avec montage rotatif autour du premier axe (13) dudit dispositif (1).

6. Dispositif (1) selon au moins l'une des revendications 3 à 5 précédentes,
**caractérisé par le fait**
**que** l'unité d'entraînement (11) comporte une unité de transmission (27) en liaison opérante avec l'élément d'entraînement (20), en vue de mouvoir ce dernier.

7. Dispositif (1) selon au moins l'une des revendications 1 à 6 précédentes,
**caractérisé par le fait**
**que** l'unité à caméra (10) comporte un élément de guidage (8) retenu, avec faculté de guidage, dans un guide à coulisse (14) de l'élément de protection (12) ; ou par le fait que ledit élément de protection (12) comporte un élément de guidage retenu, avec faculté de guidage, dans un guide à coulisse de ladite unité à caméra (10).

8. Dispositif (1) selon au moins l'une des revendications 1 à 7 précédentes,
**caractérisé par le fait**
**que** l'unité d'entraînement (11) est en liaison opérante avec l'unité à caméra (10) ou avec l'élément de protection (12) de façon telle que, dans la position de fermeture (C) et/ou dans la position d'ouverture (D) dudit élément de protection (12), un mouvement dudit élément de protection (12) soit impossible suite à l'action d'une force appliquée manuellement, de l'extérieur, audit élément de protection (12).

9. Dispositif (1) selon au moins l'une des revendications 1 à 8 précédentes,
**caractérisé par le fait**
**que** l'unité à caméra (10) est installée sur un bras pivotant (3) monté mobile, reliant l'unité d'entraînement (11) à l'élément de protection (12), un mouvement dudit bras pivotant (3), déclenché par ladite unité d'entraînement (11), ayant pour effets d'autoriser un guidage dudit élément de protection (12) vers la position de fermeture (C) et vers la position d'ouverture (D), ainsi qu'un guidage de ladite unité à caméra (10) vers l'emplacement de repos (A) et vers l'emplacement actif (B), sachant notamment que ladite unité d'entraînement (11) comporte une manivelle (5) montée à rotation autour d'un troisième axe (4) ; par le fait qu'un élément de guidage (6), implanté sur ladite manivelle (5), s'étend parallèlement au troisième axe (4) et peut être guidé autour dudit troisième axe (4) lors d'un mouvement rotatoire de ladite manivelle (5), en décrivant un cercle ; et par le fait que ledit élément de guidage (6) est en liaison opérante avec le bras pivotant (3), en vue de mouvoir ledit bras pivotant (3).

10. Dispositif (1) selon la revendication 9,
**caractérisé par le fait**
**que** l'extrémité (3a) du bras pivotant (3), tournée vers l'unité d'entraînement (11), est dotée d'un guide à coulisse (7) en vue de mouvoir ledit bras pivotant (3) par l'intermédiaire de ladite unité d'entraînement (11), notamment en vue de guider l'élément de guidage (6) de la manivelle (5).

11. Dispositif (1) selon au moins l'une des revendications 9 ou 10 précédentes,
**caractérisé par le fait**
**que** l'extrémité (3b) du bras pivotant (3), tournée vers l'élément de protection (12), est pourvue d'un élément de guidage (8) retenu, avec faculté de guidage, dans un guide à coulisse (14) dudit élément de protection (12), sachant notamment que, dans la position de fermeture de l'élément de protection (12), l'élément de guidage (8) du bras pivotant (3) est en butée contre l'extrémité (14a) du guide à coulisse (14) dudit élément de protection (12) qui est tournée à l'opposé du premier axe (13) ; et par le fait que, dans la position d'ouverture de l'élément de protection (12), ledit élément de guidage (8) dudit bras pivotant (3) est en butée contre l'extrémité (14b) dudit guide à coulisse (14) dudit élément de protection (12) qui est tournée vers ledit premier axe (13).

12. Dispositif (1) selon au moins l'une des revendications 9 à 11 précédentes,
**caractérisé par le fait**
**que** l'élément de guidage (6) de la manivelle (5), et/ou l'élément de guidage (8) de la seconde extrémité (3b) du bras pivotant (3), se présente(nt) comme un coulisseau ou comme une came.

13. Dispositif (1) selon au moins l'une des revendications 10 à 12 précédentes,
**caractérisé par le fait**
**que** le guide à coulisse (7) du bras pivotant (3) est de réalisation rectiligne et/ou arquée ; et/ou par le fait que le guide à coulisse (14) de l'élément de protection (12) est de réalisation rectiligne et/ou arquée, sachant notamment que ledit guide à coulisse (14) dudit élément de protection (12) est de réalisation rectiligne et que l'axe longitudinal (15) dudit guide à coulisse (14) dudit élément de protection (12) est dirigé vers, ou approximativement vers le premier axe (13).

14. Dispositif (1) selon au moins l'une des revendications 11 à 13 précédentes,
**caractérisé par le fait**
**que** l'élément de guidage (8) du bras pivotant (3) occupe une position latérale sur la seconde extrémité (3b) dudit bras pivotant (3).

15. Dispositif (1) selon au moins l'une des revendications 9 à 14 précédentes,
**caractérisé par le fait**
**que** l'élément de guidage (6) de la manivelle (5) est monté à rotation sur ladite manivelle (5) et/ou l'élément de guidage (8) est monté à rotation, sur le bras pivotant (3), à l'extrémité (3b) dudit bras pivotant (3) qui est tournée vers l'élément de protection (12).

16. Véhicule automobile équipé d'une unité à caméra,
**caractérisé par le fait**
**que** ledit véhicule comporte au moins un dispositif (1) conforme à au moins l'une des revendications 1 à 15 précédentes.
